(19) Europäisches Patentamt
European Patent Office
Office européen des brevets

(11) EP 2 431 197 B1

(12) **EUROPEAN PATENT SPECIFICATION**

(45) Date of publication and mention
of the grant of the patent:
**06.05.2015 Bulletin 2015/19**

(21) Application number: **10783308.9**

(22) Date of filing: **27.05.2010**

(51) Int Cl.:
***B60C 13/00*** *(2006.01)*   ***B60C 17/00*** *(2006.01)*
***B60C 13/02*** *(2006.01)*

(86) International application number:
**PCT/JP2010/058962**

(87) International publication number:
**WO 2010/140524 (09.12.2010 Gazette 2010/49)**

(54) **PNEUMATIC TIRE**

LUFTREIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.06.2009   JP 2009132237**
**01.06.2009   JP 2009132110**
**05.06.2009   JP 2009136130**
**05.06.2009   JP 2009136238**

(43) Date of publication of application:
**21.03.2012   Bulletin 2012/12**

(73) Proprietor: **Sumitomo Rubber Industries, Ltd.
Kobe-shi, Hyogo 651-0072 (JP)**

(72) Inventors:
• **HAYASHI, Satoshi**
**Hyogo 651-0072 (JP)**
• **IMAMURA, Ao**
**Hyogo 651-0072 (JP)**

(74) Representative: **Manitz, Finsterwald & Partner
GbR
Martin-Greif-Strasse 1
80336 München (DE)**

(56) References cited:
**EP-A1- 2 277 719     JP-A- 4 297 310
JP-A- 2000 016 030     JP-A- 2007 050 854**

**Description**

TECHNICAL FIELD

The present invention relates to pneumatic tires. More specifically, the present invention relates to improvement of side surfaces of pneumatic tires.

BACKGROUND ART

Run flat tires having support layers under sidewalls are being developed and widespread. Highly hard crosslinked rubber is used for the support layers. Such run flat tires are called side reinforcing type tires. In this type of run flat tires, if internal pressure is reduced due to puncture, load is supported by the support layers. The support layers reduce flexure of a tire in a punctured state. Even if running is continued in the punctured state, the highly hard crosslinked rubber allows reduction of heat generation in the support layers. This run flat tire enables running for some distance even in the punctured state. An automobile having such run flat tires mounted thereto need not be always equipped with a spare tire. The use of this run flat tire allows change of a tire in an inconvenient place to be avoided.

When running with the run flat tire in a punctured state is continued, deformation and restoration of the support layers are repeated. Due to the repetition, heat is generated in the support layers, and the tire has a high temperature. The heat causes breakage of rubber components of the tire and separation among the rubber components of the tire. It is impossible to run with the tire in which the breakage and the separation have occurred. Run flat tires which enable long time running in the punctured state are expected. In other words, run flat tires which are less likely to cause breakage and separation due to heat are expected.

In JP2007-50854, a run flat tire having grooves on surfaces of sidewalls is disclosed. The surface area of the sidewalls having the grooves is great. Therefore, an area of contact between the tire and the air is great. The great area of contact allows promotion of release of heat from the tire to the air. In this tire, temperature is less likely to rise. This document discloses the features of the preamble of the independent claim.

In WO2007/32405, a run flat tire having projecting portions on side portions is disclosed. The projecting portions cause occurrence of turbulent flow around the tire. The turbulent flow allows promotion of release of heat from the tire to the air. In this tire, temperature is less likely to rise. Further, JP 2000 016030 A and JP 4 297310 A disclose recesses on the sidewall of a tire.

CITATION LIST

PATENT LITERATURE

Patent Literature 1: JP2007-50854
Patent Literature 2: WO2007/32405

SUMMARY OF THE INVENTION

PROBLEMS TO BE SOLVED BY THE INVENTION

In the run flat tire disclosed in JP2007-50854, although the great surface area allows heat release to be promoted, the effect is limited. In the run flat tire disclosed in WO2007/32405, since air is accumulated on the downstream side of each projecting portion, heat release is insufficient on the downstream side of each projecting portion. The insufficient heat release deteriorates durability of the tire. There is room for improvement in durability of conventional run flat tires in the punctured state. There is also room for improvement in durability of the tires in a normal state (a state in which the tire is under normal internal pressure).

An object of the present invention is to make available a pneumatic tire which is excellent in durability.

SOLUTION TO THE PROBLEMS

A pneumatic tire according to the present invention includes:

a tread having an outer surface which forms a tread surface;
a pair of sidewalls extending from ends, respectively, of the tread approximately inward in a radial direction;

a pair of beads positioned approximately inwardly from the pair of sidewalls, respectively, in the radial direction;

a carcass positioned along the tread and the pair of sidewalls, so as to extend on and between the pair of beads. The tire has multiple dimples formed on side surfaces. A surface shape of each dimple is an elongated circle.

The surface shape of each dimple is preferably an ellipse. Each dimple preferably has a flat bottom surface. Each dimple preferably has a slope surface. The slope surface extends from an edge of the dimple to the flat bottom surface. The slope surface is sloped relative to a tire radial direction.

Preferably, the tire further includes support layers positioned inwardly from the pair of sidewalls, respectively, in an axial direction.

According to an example, a pneumatic tire includes:

a tread having an outer surface which forms a tread surface;

a pair of sidewalls extending from ends, respectively, of the tread approximately inward in a radial direction;

a pair of beads positioned approximately inwardly from the pair of sidewalls, respectively, in the radial direction;

a carcass positioned along the tread and the pair of sidewalls, so as to extend on and between the pair of beads.

The tire includes a land formed on side surfaces, and multiple dimples formed on the side surfaces so as to be recessed from the land. Each dimple has a bottom surface and a slope surface. The slope surface extends from an edge of a corresponding one of the dimples to the bottom surface. An angle of the slope surface relative to the land on an upstream side in an estimated air flowing direction is smaller than an angle of the slope surface relative to the land on a downstream side in the estimated air flowing direction.

According to an example, a surface shape of each dimple is a circle, and a contour of the bottom surface is also a circle. Preferably, a center of the circle of the bottom surface is positioned downstream of a center of the circle of the surface shape in the estimated air flowing direction. Preferably, the bottom surface is flat.

Preferably, the tire further includes support layers positioned inwardly from the pair of sidewalls, respectively, in an axial direction.

According to still another example, a pneumatic tire includes:

a tread having an outer surface which forms a tread surface;

a pair of sidewalls extending from ends, respectively, of the tread approximately inward in a radial direction;

a pair of beads positioned approximately inwardly from the pair of sidewalls, respectively, in the radial direction;

a carcass positioned along the tread and the pair of sidewalls, so as to extend on and between the pair of beads.

The tire includes multiple dimples formed on side surfaces. A surface shape of each dimple is a polygon.

Preferably, the surface shape of each dimple is a regular polygon. Preferably, the surface shape of each dimple is any one of a regular triangle, a square, and a regular hexagon. Preferably, one of sides of each dimple is positioned so as to be substantially parallel to another side which is adjacent to the one of the sides, and which is included in another one of the dimples.

Preferably, each dimple has a flat bottom surface. Preferably, each dimple has a slope surface. The slope surface extends from an edge of the dimple to the bottom surface. The slope surface is sloped relative to a tire radial direction.

Preferably, the tire further includes support layers positioned inwardly from the pair of sidewalls, respectively, in an axial direction.

According to still another example, a pneumatic tire includes:

a tread having an outer surface which forms a tread surface;

a pair of sidewalls extending from ends, respectively, of the tread approximately inward in a radial direction;

a pair of beads positioned approximately inwardly from the pair of sidewalls, respectively, in the radial direction;

a carcass positioned along the tread and the pair of sidewalls, so as to extend on and between the pair of beads.

Recessed and projecting patterns are formed on side surfaces of the tire. Each recessed and projecting pattern includes multiple elements, and an axial direction of each element is along a specific direction. Each element includes a first slope surface sloped downward along the specific direction, and a second slope surface sloped upward along the specific direction. A slope angle $\beta$ of the second slope surface is greater than a slope angle $\alpha$ of the first slope surface.

Preferably, a difference $(\beta-\alpha)$ between the slope angle $\beta$ and the slope angle $\alpha$ is greater than or equal to 5 degrees, and is not greater than 80 degrees. Preferably, each element has a shape representing a portion of a cylinder.

ADVANTAGEOUS EFFECTS OF THE INVENTION

In the tire according to the present invention, dimples allow side surfaces to have great surface areas. The great surface areas allow promotion of release of heat from the tire to the air. The dimples further lead to generation of turbulent flow around the tire. The turbulent flow allows promotion of release of heat from the tire to the air. In this tire, air accumulation is less likely to occur. In this tire, rise of temperature is less likely to occur. In this tire, breakage of rubber components and separation among rubber components which are caused due to heat are less likely to occur. This tire is excellent in durability.

BRIEF DESCRIPTION OF THE DRAWINGS

[FIG. 1] FIG. 1 is a cross-sectional view illustrating a portion of a pneumatic tire according to an embodiment of the present invention.
[FIG. 2] FIG. 2 is an enlarged front view illustrating a portion of a sidewall of the tire shown in FIG. 1.
[FIG. 3] FIG. 3 is an enlarged front view illustrating a portion of the sidewall shown in FIG. 2.
[FIG. 4] FIG. 4 is a cross-sectional view taken along a line IV-IV shown in FIG. 3.
[FIG. 5] FIG. 5 is a cross-sectional view illustrating a portion of a tire according to an example.
[FIG. 6] FIG. 6 is a cross-sectional view illustrating a portion of a tire according to still another example.
[FIG. 7] FIG. 7 is a front view illustrating a portion of a tire according to still another example.
[FIG. 8] FIG. 8 is a front view illustrating a portion of a sidewall of a tire according to still another example.
[FIG. 9] FIG. 9 is an enlarged front view illustrating a portion of the sidewall shown in FIG. 8.
[FIG. 10] FIG. 10 is a cross-sectional view taken along a line X-X shown in FIG. 9.
[FIG. 11] FIG. 11 is an enlarged cross-sectional view illustrating a portion of the sidewall shown in FIG. 8.
[FIG. 12] FIG. 12 is a schematic front view illustrating the tire shown in FIG. 8.
[FIG. 13] FIG. 13 is a front view illustrating a portion of a sidewall of a tire according to still another example.
[FIG. 14] FIG. 14 is an enlarged front view illustrating a portion of the sidewall shown in FIG. 13.
[FIG. 15] FIG. 15 is a cross-sectional view taken along a line XV-XV shown in FIG. 14.
[FIG. 16] FIG. 16 is an enlarged front view illustrating a portion of the sidewall shown in FIG. 13.
[FIG. 17] FIG. 17 is a front view illustrating a portion of a tire according to still another example.
[FIG. 18] FIG. 18 is a front view illustrating a portion of a tire according to still another example.
[FIG. 19] FIG. 19 is a cross-sectional view illustrating a portion of a pneumatic tire according to still another example.
[FIG. 20] FIG. 20 is an enlarged front view illustrating a portion of a sidewall of the tire shown in FIG. 19.
[FIG. 21] FIG. 21 is an enlarged front view illustrating a portion of the sidewall shown in FIG. 20.
[FIG. 22] FIG. 22 is a cross-sectional view taken along a line XXII-XXII shown in FIG. 21.
[FIG. 23] FIG. 23 is an enlarged cross-sectional view illustrating a portion of the sidewall shown in FIG. 20.
[FIG. 24] FIG. 24 is a cross-sectional view illustrating a portion of a pneumatic tire according to still another example.

DESCRIPTION OF EMBODIMENTS

Hereinafter, the present invention will be described in detail based on preferred embodiments with reference to the drawings as necessary.

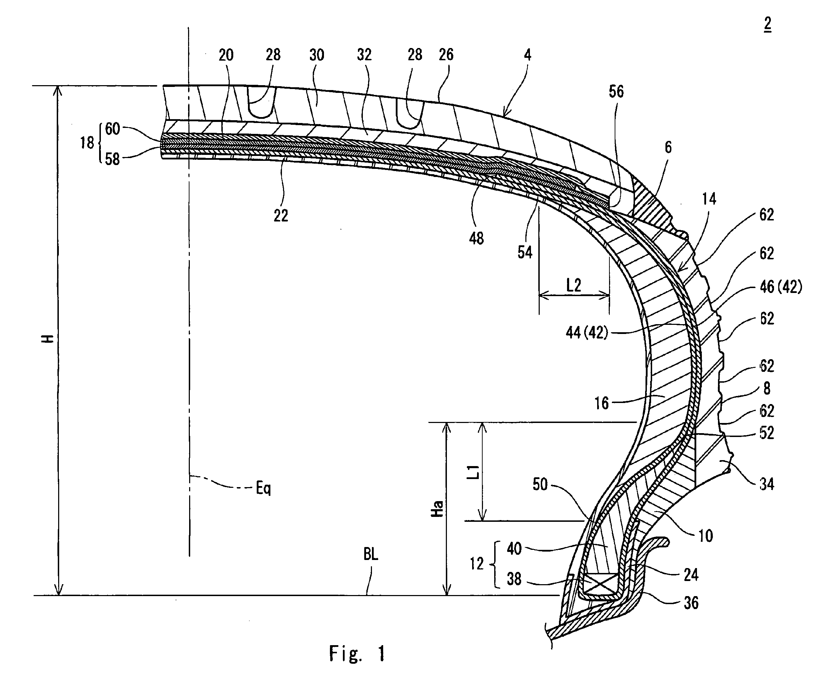

FIG. 1 shows a run flat tire 2 which enables running in a punctured state. In FIG. 1, the upward/downward direction represents a radial direction, the leftward/rightward direction represents an axial direction, and the direction orthogonal to the surface of the sheet represents a circumferential direction. The tire 2 has a shape which is almost bilaterally symmetric about an alternate long and short dash line Eq shown in FIG. 1. The alternate long and short dash line Eq represents an equator plane of the tire 2. In FIG. 1, a double-headed arrow H represents the height of the tire 2 from a reference line BL (which will be described below in detail).

The tire 2 includes a tread 4, wings 6, sidewalls 8, clinch sections 10, beads 12, a carcass 14, support layers 16, a belt 18, a band 20, an inner liner 22, and chafers 24. The belt 18 and the band 20 form a reinforcing layer. The reinforcing layer may be formed of the belt 18 only. The reinforcing layer may be formed of the band 20 only.

The tread 4 has a shape projecting outward in the radial direction. The tread 4 forms a tread surface 26 which can contact with a road surface. Grooves 28 are formed on the tread surface 26. A tread pattern is formed due to the grooves 28. The tread 4 has a cap layer 30 and a base layer 32. The cap layer 30 is formed of a crosslinked rubber. The base layer 32 is formed of another crosslinked rubber. The cap layer 30 is located outwardly of the base layer 32 in the radial direction. The cap layer 30 is layered over the base layer 32.

The sidewalls 8 extend from the ends, respectively, of the tread 4 approximately inward in the radial direction.

The sidewalls 8 are formed of a crosslinked rubber. The sidewalls 8 prevent injury of the carcass 14. The sidewalls 8 include ribs 34, respectively. The ribs 34 project outward in the axial direction. During running in a punctured state, the ribs 34 abut against flanges 36 of a rim. The abutment enables deformation of the beads 12 to be reduced. The tire 2 in which the deformation is reduced is excellent in durability in a punctured state.

The clinch sections 10 are located approximately inwardly from the sidewalls 8, respectively, in the radial direction. The clinch sections 10 are located outwardly of the beads 12 and the carcass 14 in the axial direction. The clinch sections 10 abut against the flanges 36 of the rim.

The beads 12 are located inwardly from the sidewalls 8, respectively, in the radial direction. Each bead 12 includes a core 38, and an apex 40 extending from the core 38 outward in the radial direction. The core 38 is formed so as to be ring-shaped, and includes a non-stretchable wound wire (typically, a steel wire). The apex 40 is tapered outward in the radial direction. The apex 40 is formed of a highly hard crosslinked rubber.

In FIG. 1, an arrow Ha represents the height of the apex 40 from the reference line BL. The reference line BL passes through the innermost point of the core 38 in the radial direction. The reference line BL extends in the axial direction. A ratio (Ha/H) of the height Ha of the apex 40 to the height H of the tire 2 is preferably greater than or equal to 0.1, and is preferably not greater than 0.7. When the ratio (Ha/H) is greater than or equal to 0.1, the apex 40 can support the weight of an automobile in a punctured state. The apex 40 contributes to durability of the tire 2 in the punctured state. In this viewpoint, the ratio (Ha/H) is more preferably greater than or equal to 0.2. The tire 2 in which the ratio (Ha/H) is less than or equal to 0.7 is excellent in ride comfort. In this viewpoint, the ratio (Ha/H) is more preferably less than or equal to 0.6.

The carcass 14 includes a carcass ply 42. The carcass ply 42 extends on and between the beads 12 on both sides, and extends along the tread 4 and the sidewalls 8. The carcass ply 42 is turned up around each core 38 from the inner side to the outer side in the axial direction. Due to this turning-up, the carcass ply 42 has formed therein a main portion 44 and turned-up portions 46. Ends 48 of the turned-up portions 46 are located immediately below the belt 18. In other words, each turned-up portion 46 and the belt 18 overlap each other. The carcass 14 has a so-called "ultra-highly turned-up structure". The carcass 14 having the ultra-highly turned-up structure contributes to durability of the tire 2 in a punctured state. The carcass 14 contributes to durability in a punctured state.

The carcass ply 42 is formed of a great number of cords aligned with each other, and a topping rubber. An absolute value of an angle of each cord relative to the equator plane ranges from 45 degrees to 90 degrees, and more preferably ranges from 75 degrees to 90 degrees. In other words, the carcass 14 has a radial structure. The cords are formed of an organic fiber. Examples of preferable organic fiber include polyester fibers, nylon fibers, rayon fibers, polyethylene naphthalate fibers, and aramid fibers.

The support layers 16 are located inwardly from the sidewalls 8, respectively, in the axial direction. Each support layer 16 is located between the carcass 14 and the inner liner 22. The support layers 16 are tapered inward and outward in the radial direction. Each support layer 16 has a crescent-like shape. The support layers 16 are formed of a highly hard crosslinked rubber. When the tire 2 is punctured, the support layers 16 support a load. The support layers 16 enable running for some distance with the tire 2 even in a punctured state. The run flat tire 2 is of a side reinforcing type. The tire 2 may include support layers each having a shape different from the shape of each support layer 16 shown in FIG. 1.

Portions of the carcass 14 which overlap the support layers 16 are separated from the inner liner 22. In other words, the carcass 14 is bent due to the support layers 16 being provided. In a punctured state, compressive load is applied to the support layers 16, and tensile load is applied to regions of the carcass 14 which are near the support layers 16. Each support layer 16 is a lump of rubber, and can sufficiently bear the compressive load. The cords of the carcass 14 can sufficiently bear the tensile load. The support layers 16 and the carcass cords can reduce vertical flexure of the tire 2 in the punctured state. The tire 2 having the reduced vertical' flexure is excellent in handling stability in the punctured state.

In the viewpoint of the reduction of the vertical distortion in the punctured state, the hardness of each support layer 16 is preferably higher than or equal to 60, and is more preferably higher than or equal to 65. In the viewpoint of ride comfort in a normal state (a state in which the tire 2 is under normal internal pressure), the hardness is preferably lower than or equal to 90, and is more preferably lower than or equal to 80. The hardness is measured by using a type A durometer in compliance with the standard of "JIS K6253". The durometer is pressed against the cross-sectional surface shown in FIG. 1, to measure a hardness. The measurement is performed at a temperature of 23°C.

Bottom ends 50 of the support layers 16 are located inwardly from upper ends 52 of the apexes 40, respectively, in the radial direction. In other words, the support layers 16 and the apexes 40 overlap each other. In FIG. 1, an arrow L1 represents a distance in the radial direction between the bottom end 50 of each support layer 16 and a corresponding one of the upper ends 52 of the apexes 40. The distance L1 is preferably longer than or equal to 5 mm, and is preferably not longer than 50 mm. In the tire 2 in which the distance L1 is in this range, uniform stiffness distribution can be obtained. The distance L1 is more preferably longer than or equal to 10 mm. The distance L1 is more preferably shorter than or equal to 40 mm.

Upper ends 54 of the support layers 16 are located inwardly from ends 56, respectively, of the belt 18 in the axial direction. In other words, the support layers 16 and the belt 18 overlap each other. In FIG. 1, an arrow L2 represents a distance in the axial direction between the upper end 54 of each support layer 16 and a corresponding one of the ends 56 of the belt 18. The distance L2 is preferably longer than or equal to 2 mm, and is preferably not longer than 50 mm. In the tire 2 in which the distance L2 is in this range, uniform stiffness distribution can be obtained. The distance L2 is more preferably longer than or equal to 5 mm. The distance L2 is more preferably shorter than or equal to 40 mm.

In the viewpoint of reduction of the vertical distortion in a punctured state, the maximum thickness of each support layer 16 is preferably greater than or equal to 3 mm, and is more preferably greater than or equal to 4 mm, and is particularly preferably greater than or equal to 7 mm. In the viewpoint of reduction in weight of the tire 2, the maximum thickness is preferably less than or equal to 25 mm, and is more preferably less than or equal to 20 mm.

The belt 18 is located outwardly of the carcass 14 in the radial direction. The belt 18 is layered over the carcass 14. The belt 18 reinforces the carcass 14. The belt 18 includes an inner layer 58 and an outer layer 60. As is apparent from FIG. 1, the width of the inner layer 58 is slightly greater than the width of the outer layer 60. Each of the inner layer 58 and the outer layer 60 includes a great number of cords aligned with each other, and a topping rubber, which are not shown. Each cord is tilted relative to the equator plane. An absolute value of the tilt angle is typically greater than or equal to 10 degrees, and is not greater than 35 degrees. A direction in which each cord of the inner layer 58 is tilted relative to the equator plane is opposite to a direction in which each cord of the outer layer 60 is tilted relative to the equator plane. A preferable material of the cords is a steel. An organic fiber may be used for the cords. The width of the belt 18 in the axial direction is preferably greater than or equal to 0.85 times the maximum width of the tire 2, and is preferably not greater than 1.0 time the maximum width of the tire 2. The belt 18 may be formed of three or more layers.

The band 20 covers the belt 18. The band 20 includes a cord and a topping rubber, which are not shown. The cord is helically wound. The band 20 has a so-called jointless structure. The cord extends in substantially circumferential direction. An angle of the cord relative to the circumferential direction is less than or equal to 5 degrees, and is more preferably less than or equal to 2 degrees. The belt 18 is secured due to the cord, so that the lifting of the belt 18 is less likely to occur. The cord is formed of an organic fiber. Examples of preferable organic fiber include nylon fibers, polyester fibers, rayon fibers, polyethylene naphthalate fibers, and aramid fibers.

The tire 2 may include, instead of the band 20, edge bands which cover only the vicinity of the ends of the belt 18. The tire 2 may include both the edge bands and the band 20.

The inner liner 22 is bonded to the inner circumferential surface of the carcass 14. The inner liner 22 is formed of a crosslinked rubber. A rubber that is excellent in air blocking property is used for the inner liner 22. The inner liner 22 maintains internal pressure of the tire 2.

As shown in FIG. 1, the tire 2 includes multiple dimples 62 on the side surfaces. In the present invention, the side surfaces represent regions of the outer surfaces of the tire 2 which can be viewed in the axial direction. Typically, the dimples 62 are formed on the outer surfaces of the sidewalls 8 or on the outer surfaces of the clinch sections 10.

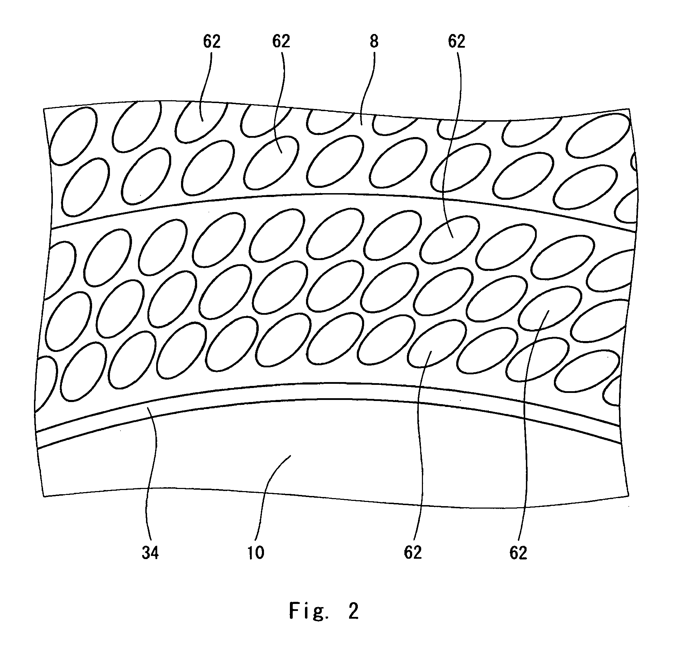

FIG. 2 is an enlarged front view illustrating a portion of the sidewall 8 of the tire 2 shown in FIG. 1. FIG. 2 shows the multiple dimples 62. The surface shape of each dimple 62 is an oblong circle (an elongated circle). Specifically, the surface shape is an ellipse. In the present invention, the surface shape represents a shape of the contour of each dimple 62 as viewed at infinity. The ellipse includes two fixed points. At any point on the contour of each dimple 62, a sum of a distance from a first fixed point thereto and a distance from a second fixed point thereto is constant.

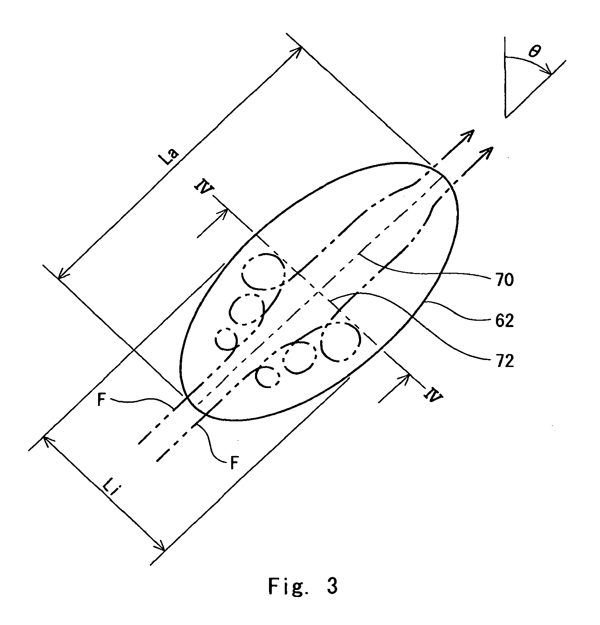

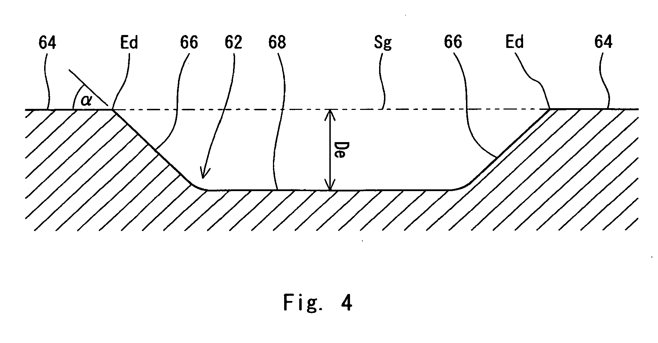

FIG. 3 is an enlarged front view illustrating a portion of the sidewall 8 shown in FIG. 2. FIG. 4 is a cross-sectional view taken along a line IV-IV shown in FIG. 3. The upward/downward direction in FIG. 3 represents the radial direction of the tire 2. As shown in FIG. 4, each dimple 62 is recessed. A region, on the side surfaces, other than the dimples 62 is a land 64.

The surface area of the side surfaces including the dimples 62 is greater than a surface area of the side surfaces, which is estimated on the assumption that the side surfaces do not include the dimples 62. An area of contact between the tire 2 and the air is great. The great area of contact allows promotion of release of heat from the tire 2 to the air.

As shown in FIG. 4, each dimple 62 includes a slope surface 66 and a bottom surface 68. The slope surface 66 is ring-shaped. The slope surface 66 is sloped relative to the radial direction of the tire 2. The slope surface 66 extends from an edge Ed of the dimple 62 to the bottom surface 68. The bottom surface 68 is flat.

In FIG. 3, an airflow F around the tire 2 is represented by alternate long and two short dashes lines. The tire 2 rotates during running. A vehicle having the tire 2 mounted thereto travels. Air flows across the dimples 62 by the rotation of the tire 2 and the travelling of the vehicle. Air flows along the land 64, flows along the slope surface 66, and flows into the bottom surface 68. The air flows through the dimple 62, flows along the slope surface 66 located on the downstream side, and flows out of the dimple 62. The air further flows along the land 64 located on the downstream side.

As shown in FIG. 3, when air flows into each dimple 62, vortexes are generated in the airflow. In other words, turbulent flow is generated at the entrance to each dimple 62. When running with the tire 2 in a punctured state is continued, deformation and restoration of the support layers 16 are repeated. This repetition causes generation of heat in the support layers 16. The heat is conveyed to the sidewalls 8 and the clinch sections 10. The turbulent flow generated in each dimple 62 allows promotion of release of the heat to the air. In the tire 2, breakage of rubber components and separation among rubber components which are caused due to heat are reduced. The tire 2 enables long time running in the punctured state. The turbulent flow also contributes to heat release in a normal state. The dimples 62 contribute to durability of the tire 2 in the normal state. Running in a state where an internal pressure is less than a normal value may be inadvertently caused by a driver. The dimples 62 can also contribute to durability in this case.

The air in which the vortexes are generated flows along the slope surface 66 and the bottom surface 68 inside each dimple 62. The air smoothly flows out of the dimple 62. The bottom surface 68 which is flat promotes smooth flowing-out. In the tire 2, air accumulation which may occur in conventional tires having projecting portions and conventional tires having grooves is less likely to occur. Therefore, prevention of heat release due to air accumulation may not occur. The tire 2 is extremely excellent in durability.

In the tire 2, since the dimples 62 allow rise of temperature to be reduced, even if the support layers 16 are thin, long time running in the punctured state is enabled. The support layers 16 which are thin allow reduction in weight of the tire 2. The support layers 16 which are thin enable reduction of a rolling resistance. The tire 2 that has a light weight and a reduced rolling resistance contributes to reduction in fuel consumption of vehicles. Further, the support layers 16 which are thin enable excellent ride comfort.

In FIG. 3, a line segment denoted by reference numeral 70 represents a longer axis (major axis). The major axis 70 is the longest line segment among line segments which can be drawn in the contour of the dimple 62. In FIG. 3, a line segment denoted by reference numeral 72 is a shorter axis (minor axis). The minor axis 72 is the longest line segment among line segments which can be drawn in the contour of the dimple 62 so as to be orthogonal to the major axis 70. The length La of the major axis 70 is longer than the length Li of the minor axis 72.

In the present invention, the "elongated circle" represents a figure which includes the major axis 70 and the minor axis 72, and has no vertex. Preferably, the minor axis 72 intersects the major axis 70'at the center of the major axis 70. Preferably, the major axis 70 intersects the minor axis 72 at the center of the minor axis 72. Preferably, the contour of the elongated circle has no inwardly projecting portion. A figure which is not a strict ellipse but similar to an ellipse is included in the concept of the elongated circle. A shape similar to an outline shape of a track in an athletics track field described below is included in the concept of the elongated circle. The dimple 62 having an ellipsoidal surface shape is most preferable.

In FIG. 3, reference character θ represents an angle of the major axis 70 relative to the radial direction of the tire 2. The angle θ is set so as to be greater than or equal to -90 degrees, and be less than 90 degrees. When the angle θ is -90 degrees, the major axis 70 extends along the circumferential direction of the tire 2. When the angle θ is 0 degrees, the major axis 70 extends along the radial direction of the tire 2. The angle θ is determined according to a direction of airflow generated by the rotation of the tire 2 and travelling of the vehicle. The dimples 62 each having a proper angle θ allow promotion of release of heat from the tire 2.

The elongated circle has directionality. In a pattern in which the dimples 62 have contours shaped as an elongated circle, pitches between the dimples in the radial direction can be varied without varying pitches between the dimples in the circumferential direction. Further, in this pattern, pitches between the dimples in the circumferential direction can be varied without varying pitches between the dimples in the radial direction. In this dimple pattern, a degree of freedom in pitch between the dimples is increased as compared to a pattern formed by circular dimples only. The proper pattern allows promotion of release of heat from the tire 2.

In the viewpoint of the degree of freedom in pattern, the ratio (La/Li) is preferably greater than or equal to 1.2/1, and is more preferably greater than or equal to 1.5/1, and is particularly preferably greater than or equal to 1.8/1. In the viewpoint of reduction of air accumulation, the ratio (La/Li) is preferably less than or equal to 5/1, and is more preferably less than or equal to 3/1, and is particularly preferably less than or equal to 2/1. The tire 2 may include two or more kinds of dimples which have the ratios (La/Li) representing different values.

The length La is preferably longer than or equal to 3 mm, and is preferably not longer than 70 mm. Into the dimples 62 each having the length La longer than or equal to 3 mm, air sufficiently flows, thereby sufficiently generating turbulent flow. The dimples 62 allow rise of temperature in the tire 2 to be reduced. In this viewpoint, the length La is more preferably longer than or equal to 4 mm, and is particularly preferably longer than or equal to 6 mm. In the tire 2 which includes the dimples 62 each having the length La shorter than or equal to 70 mm, turbulent flow is likely to be generated in many places. Further, in the tire 2 which includes the dimples 62 each having the length La shorter than or equal to 70 mm, the surface area of the side surfaces is great. The great surface area allows promotion of release of heat from the tire 2. The dimples 62 allow rise of temperature in the tire 2 to be reduced. In this viewpoint, the length La is more preferably shorter than or equal to 50 mm, and is particularly preferably shorter than or equal to 30 mm. The tire 2 may include two or more kinds of dimples which have the lengths La representing different values.

The length Li is preferably longer than or equal to 2 mm, and is preferably not longer than 55 mm. Into the dimples 62 each having the length Li longer than or equal to 2 mm, air sufficiently flows, thereby sufficiently generating turbulent flow. The dimples 62 allow rise of temperature in the tire 2 to be reduced. In this viewpoint, the length Li is more preferably longer than or equal to 3 mm. In the tire 2 which includes the dimples 62 each having the length Li shorter than or equal to 55 mm, turbulent flow is likely to be generated in many places. Further, in the tire 2 which includes the dimples 62 each having the length Li shorter than or equal to 55 mm, the surface area of the side surfaces is great. The great surface area allows promotion of release of heat from the tire 2. The dimples 62 allow rise of temperature in the tire 2 to be reduced. In this viewpoint, the length Li is more preferably shorter than or equal to 40 mm, and is particularly preferably shorter than or equal to 20 mm. The tire 2 may include two or more kinds of dimples which have the lengths Li representing different values.

In FIG. 4, an alternate long and two short dashes line Sg represents a line segment extending from an edge Ed which is one of the edges of the dimple 62 to the edge Ed which is the other of the edges thereof. In FIG. 4, an arrow De represents the depth of each dimple 62. The depth De is a distance between the deepest portion of the dimple 62 and the line segment Sg. The depth De is preferably greater than or equal to 0.2 mm, and is preferably not greater than 7 mm. In dimples 62 each having the depth De greater than or equal to 0.2 mm, sufficient turbulent flow is generated. In this viewpoint, the depth De is more preferably greater than or equal to 0.5 mm, and is particularly preferably greater than or equal to 1.0 mm. In the dimples 62 each having the depth De less than or equal to 7 mm, air is less likely to be accumulated at the bottom. Further, in the tire 2 in which the depth De is less than or equal to 7 mm, the sidewalls 8, the clinch sections 10, and the like each have a sufficient thickness. In this viewpoint, the depth De is more preferably less than or equal to 4 mm, and is particularly preferably less than or equal to 3.0 mm. The tire 2 may include two or more kinds of dimples which have the depths De representing different values.

The volume of the dimple 62 is preferably greater than or equal to 1.0 mm$^3$, and is preferably not greater than 400 mm$^3$. In the dimples 62 each having the volume greater than or equal to 1.0 mm$^3$, sufficient turbulent flow is generated. In this viewpoint, the volume is more preferably greater than or equal to 1.5 mm$^3$, and is particularly preferably greater than or equal to 2.0 mm$^3$. In the dimples 62 each having the volume less than or equal to 400 mm$^3$, air is less likely to be accumulated at the bottom. Further, in the tire 2 in which the volume of the dimple 62 is less than or equal to 400 mm$^3$, the sidewalls 8, the clinch sections 10, and the like each have a sufficient stiffness. In this viewpoint, the volume is more preferably less than or equal to 300 mm$^3$, and is particularly preferably less than or equal to 250 mm$^3$.

The total value of the volumes of all the dimples 62 is preferably greater than or equal to 300 mm$^3$, and is preferably not greater than 5000000 mm$^3$. In the tire 2 having the total value greater than or equal to 300 mm$^3$. sufficient heat release occurs. In this viewpoint, the total value is more preferably greater than or equal to 600 mm$^3$, and is particularly preferably greater than or equal to 800 mm$^3$. In the tire 2 having the total value less than or equal to 5000000 mm$^3$, the sidewalls 8, the clinch sections 10, and the like each have a sufficient stiffness. In this viewpoint, the total volume is more preferably less than or equal to 1000000 mm$^3$, and is particularly preferably less than or equal to 500000 mm$^3$.

The area of the dimple 62 is preferably greater than or equal to 3 mm$^2$, and is preferably not greater than 4000 mm$^2$. In the dimples 62 each having the area greater than or equal to 3 mm$^2$, sufficient turbulent flow is generated. In this viewpoint, the area is more preferably greater than or equal to 12 mm$^2$, and is particularly preferably greater than or equal to 20 mm$^2$. In the tire 2 which includes the dimples 62 each having the area less than or equal to 4000 mm$^2$, the sidewalls 8, the clinch sections 10, and the like each have a sufficient strength. In this viewpoint, the area is more preferably less than or equal to 2000 mm$^2$, and is particularly preferably less than or equal to 1300 mm$^2$. In the present invention, the area of the dimple 62 represents an area of a region surrounded by the contour of the dimple 62.

In the present invention, an occupancy ratio Y of the dimples 62 is calculated by using the following equation.

$$Y=(S1/S2)*100$$

In this equation, S1 represents the areas of the dimples 62 included in a reference region, and S2 represents a surface area of the reference region, which is estimated on the assumption that the reference region does not include the dimples 62. The reference region represents a region, on the side surfaces, having a height from the reference line BL that is higher than or equal to 20% of the height H of the tire 2, and is not higher than 80% thereof. The occupancy ratio Y is preferably greater than or equal to 10%, and is preferably not greater than 85%. In the tire 2 having the occupancy ratio Y greater than or equal to 10%, sufficient heat release occurs. In this viewpoint, the occupancy ratio Y is more preferably greater than or equal to 30%, and is particularly preferably greater than or equal to 40%. In the tire 2 having the occupancy ratio Y less than or equal to 85%, the land has a sufficient abrasion resistance. In this viewpoint, the occupancy ratio Y is more preferably less than or equal to 80%, and is particularly preferably less than or equal to 75%.

The width (smallest value) of the land between the dimples 62 adjacent to each other is preferably greater than or equal to 0.05 mm, and is preferably not greater than 20 mm. In the tire 2 in which the width is greater than or equal to 0.05 mm, the land has a sufficient abrasion resistance. In this viewpoint, the width is more preferably greater than or equal to 0.10 mm, and is particularly preferably greater than or equal to 0.2 mm. In the tire 2 in which the width is less than or equal to 20 mm, turbulent flow is likely to be generated in many places. In this viewpoint, the width is more preferably less than or equal to 15 mm, and is particularly preferably less than or equal to 10 mm.

The total number of the dimples 62 is preferably greater than or equal to 50, and is preferably not greater than 5000. In the tire 2 having the total number greater than or equal to 50, turbulent flow is likely to be generated in many places. In this viewpoint, the total number is more preferably greater than or equal to 100, and is particularly preferably greater than or equal to 150. In the tire 2 having the total number less than or equal to 5000, each dimple 62 can have a sufficient size. In this viewpoint, the total number is more preferably less than or equal to 2000, and is particularly preferably less than or equal to 1000. The total number and the pattern of the dimples 62 can be determined as necessary according to the size of the tire 2 and the area of the side portions.

The tire 2 may have, in addition to the dimples 62 the surface shape of which is the elongated circle, dimples having another surface shape. Examples of the other surface shape include a circle, a polygon, and a tear-like shape (tear drop type). A ratio of the number of the dimples 62 the surface shape of which is the elongated circle, to the total number of dimples, is preferably greater than or equal to 30%, and is particularly preferably greater than or equal to 50%. The tire 2 may have projecting portions in addition to the dimples 62.

As shown in FIG. 4, the cross-sectional shape of each dimple 62 is a trapezoid. In this dimple 62, the volume is great relative to the depth De. Therefore, both the sufficient volume and the shallow depth De can be realized. When the depth De is set so as to be shallow, each of the sidewalls 8, the clinch sections 10, and the like can have a sufficient thickness immediately below each dimple 62. Such dimples 62 can contribute to stiffness of the side surfaces.

In FIG. 4, reference character $\alpha$ represents an angle of the slope surface 66. The angle $\alpha$ is preferably greater than or equal to 10 degrees, and is preferably not greater than 70 degrees. In the dimples 62 each having the angle $\alpha$ greater than or equal to 10 degrees, both the sufficient volume and the shallow depth De can be realized. In this viewpoint, the angle $\alpha$ is more preferably greater than or equal to 20 degrees, and is particularly preferably greater than or equal to 25 degrees. In the dimples 62 each having the angle $\alpha$ less than or equal to 70 degrees, air smoothly flows. In this viewpoint, the angle is more preferably less than or equal to 60 degrees, and is particularly preferably less than or equal to 55 degrees.

When the dimples 62 each have the size and the shape as described above, and the total number of the dimples 62 is as described above, their effects are exerted in the tires 2 which are various in size. In the tire 2 for use in passenger cars, the dimples 62 particularly exert their effects when the width of the tire 2 is greater than or equal to 100 mm, and is not greater than 350 mm, and the aspect ratio of the tire 2 is greater than or equal to 30%, and is not greater than 100%, and the diameter of the rim is greater than or equal to 10 inches, and is not greater than 25 inches.

In production of the tire 2, a plurality of rubber components are assembled, to obtain a raw cover (unvulcanized tire). The raw cover is put into a mould. The outer surface of the raw cover abuts against a cavity surface of the mould. The inner surface of the raw cover abuts against a bladder or an insert core. The raw cover is pressurized and heated in the mould. The rubber composition in the raw cover flows due to the pressurization and heating. Cross-linking reaction is caused in the rubber due to the heating, to obtain the tire 2. The dimples 62 are formed in the tire 2 by using a mould having pimples on the cavity surface. The dimples 62 each have a shape obtained by inverting the shape of the pimples.

The dimensions and angles of each component of the tire 2 are measured in a state where the tire 2 is assembled in a normal rim, and the tire 2 is filled with air so as to obtain a normal internal pressure, unless otherwise specified. During the measurement, no load is applied to the tire 2. In the specification of the present invention, the normal rim represents a rim which is specified according to the standard with which the tire 2 complies. The "standard rim" in the JATMA standard, the "Design Rim" in the TRA standard, and the "Measuring Rim" in the ETRTO standard are included in the normal rim. In the specification of the present invention, the normal internal pressure represents an internal pressure which is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure. It is to be noted that, in the case of the tire 2 for use in passenger cars, the dimensions and angles are measured in a state where the internal pressure is 180 kPa.

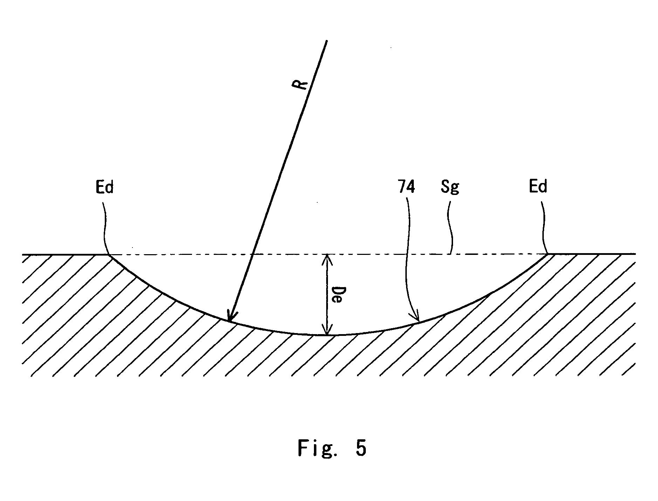

FIG. 5 is a cross-sectional view illustrating a portion of a tire according to an example. FIG. 5 shows a vicinity of a dimple 74. Components of the tire other than the dimples 74 are the same as those of the tire 2 shown in FIG. 1.

The surface shape of each dimple 74 is an elongated circle. The cross-sectional shape of each dimple 74 is an arc-like shape. In this tire, air smoothly flows out of the dimples 74. In the dimples 74, air accumulation is reduced. This tire enables sufficient heat release.

In FIG. 5, an arrow R represents a curvature radius of the dimple 74. The curvature radius R is preferably greater than or equal to 3 mm, and is preferably not greater than 200 mm. In the dimples 74 each having the curvature radius R greater than or equal to 3 mm, air smoothly flows. In this viewpoint, the curvature radius R is more preferably greater than or equal to 5 mm, and is particularly preferably greater than or equal to 7 mm. In the dimples 74 each having the curvature radius R less than or equal to 200 mm, a sufficient volume can be realized. In this viewpoint, the curvature radius R is more preferably less than or equal to 100 mm, and is particularly preferably less than or equal to 50 mm. The specifications such as the length La, the length Li, the ratio (La/Li), the depth De, the volume, and the area of each dimple 74 are the same as those of the dimple 62 shown in FIG. 3 and FIG. 4.

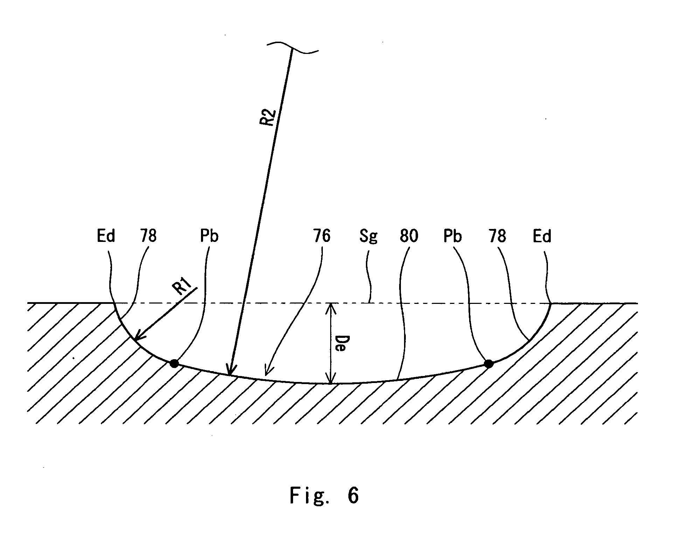

FIG. 6 is a cross-sectional view illustrating a portion of a tire according to still another example. FIG. 6 shows a vicinity of a dimple 76. Components of the tire other than the dimples 76 are the same as those of the tire 2 shown in FIG. 1.

The surface shape of each dimple 76 is an elongated circle. Each dimple 76 includes a first curved surface 78 and a second curved surface 80. The first curved surface 78 is ring-shaped. The second curved surface 80 has a bowl-like shape. In FIG. 6, reference character Pb represents a boundary point between the first curved surface 78 and the second curved surface 80. The second curved surface 80 contacts with the first curved surface 78 at the boundary point Pb. The dimple 76 is of a so-called double radius type. The specifications such as the length La, the length Li, the ratio (La/Li), the depth De, the volume, and the area of each dimple 76 are the same as those of the dimple 62 shown in FIG. 3 and FIG. 4.

In FIG. 6, an arrow R1 represents a curvature radius of the first curved surface 78, and an arrow R2 represents a curvature radius of the second curved surface 80. The curvature radius R1 is less than the curvature radius R2. A ratio (R1/R2) of the curvature radius R1 to the curvature radius R2 is preferably greater than or equal to 0.1, and is preferably not greater than 0.8. In the dimples 76 each having the ratio (R1/R2) greater than or equal to 0.1, air smoothly flows. In this viewpoint, the ratio (R1/R2) is more preferably greater than or equal to 0.2, and is particularly preferably greater than or equal to 0.3. In the dimples 76 each having the ratio (R1/R2) less than or equal to 0.8, both the sufficient volume and the shallow depth De can be realized. In this viewpoint, the ratio (R1/R2) is more preferably less than or equal to 0.7, and is particularly preferably less than or equal to 0.6.

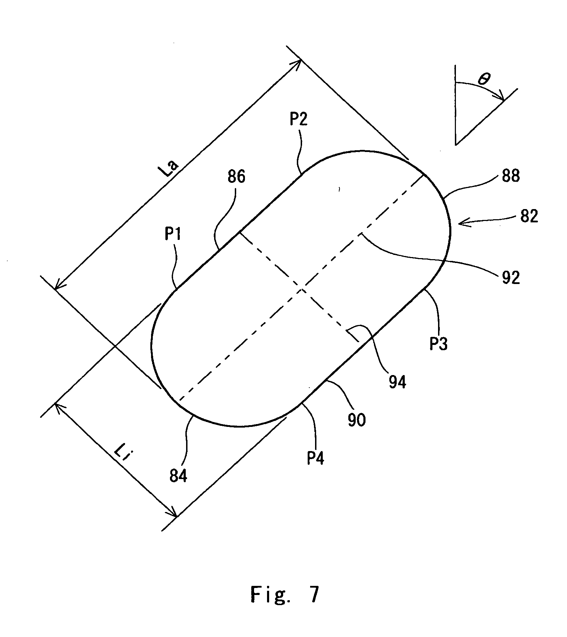

FIG. 7 is a front view illustrating a portion of a tire according to still another example. FIG. 7 shows a vicinity of a dimple 82. Components of the tire other than the dimples 82 are the same as those of the tire 2 shown in FIG. 1.

The surface shape of each dimple 82 is an elongated circle. The contour of each dimple 82 includes a first semicircle 84, a first straight line 86, a second semicircle 88, and a second straight line 90. The first straight line 86 contacts with the first semicircle 84 at a point P1. The second semicircle 88 contacts with the first straight line 86 at a point P2. The second straight line 90 contacts with the second semicircle 88 at a point P3. The first semicircle 84 contacts with the second straight line 90 at a point P4. The surface shape of each dimple 82 is similar to an outline shape of a track in an athletics track field.

In FIG. 7, a line segment denoted by reference numeral 92 represents the major axis, and a line segment denoted by reference numeral 94 represents the minor axis. The length La of the major axis 92 is longer than the length Li of the minor axis 94. The dimple 82 has directionality. In the pattern including the dimples 82, a degree of freedom in pitch between the dimples is increased. The proper pattern allows promotion of release of heat from the tire.

In the viewpoint of the degree of freedom in pattern, a ratio (La/Li) is preferably greater than or equal to 1-2/1, is more preferably greater than or equal to 1.5/1, and is particularly preferably greater than or equal to 1.8/1. In the viewpoint of generation of turbulent flow in many places, the ratio (La/Li) is preferably less than or equal to 5/1, is more preferably less than or equal to 3.0/1, and is particularly preferably less than or equal to 2.5/1. The tire may include two or more kinds of dimples which have the ratios (La/Li) representing different values.

The length La is preferably greater than or equal to 3 mm, and is preferably not greater than 70 mm. Into the dimples 82 each having the length La greater than or equal to 3 mm, air sufficiently flows, thereby sufficiently generating turbulent flow. The dimples 82 allow rise of temperature in the tire to be reduced. In this viewpoint, the length La is more preferably greater than or equal to 4 mm, and is particularly preferably greater than or equal to 6 mm. In the tire which includes the dimples 82 each having the length La less than or equal to 70 mm, turbulent flow is likely to be generated in many places. Further, in the tire which includes the dimples 82 each having the length La less than or equal to 70 mm, a surface area of the side surfaces is great. The great surface area allows promotion of release of heat from the tire. The dimples 82 allow rise of temperature in the tire to be reduced. In this viewpoint, the length La is more preferably less than or equal to 50 mm, and is particularly preferably less than or equal to 30 mm. The tire may include two or more kinds of dimples which have the lengths La representing different values.

The length Li is preferably greater than or equal to 3 mm, and is preferably not greater than 55 mm. Into the dimples 82 each having the length Li greater than or equal to 3 mm, air sufficiently flows, thereby sufficiently generating turbulent flow. The dimples 82 allow rise of temperature in the tire to be reduced. In this viewpoint, the length Li is more preferably greater than or equal to 4 mm. In the tire which includes the dimples 82 each having the length Li less than or equal to 55 mm, turbulent flow is likely to be generated in many places. Further, in the tire which includes the dimples 82 each having the length Li less than or equal to 55 mm, a surface area of the side surfaces is great. The great surface area allows promotion of release of heat from the tire. The dimples 82 allow rise of temperature in the tire to be reduced. In this viewpoint, the length Li is more preferably less than or equal to 40 mm, and is particularly preferably less than or equal to 20 mm. The tire may include two or more kinds of dimples which have the lengths Li representing different values.

In FIG. 7, reference character θ denotes an angle of the major axis 92 relative to the tire radial direction. The angle θ is set so as to be greater than or equal to -90 degrees, and is less than 90 degrees. The angle θ is determined according to a direction of the airflow generated by the rotation of the tire and travelling of the vehicle. The dimples each having a proper angle θ allow promotion of release of heat from the tire.

The specifications such as the depth De, the volume, and the area of each dimple 82 are the same as those of the dimple 62 shown in FIG. 3 and FIG. 4.

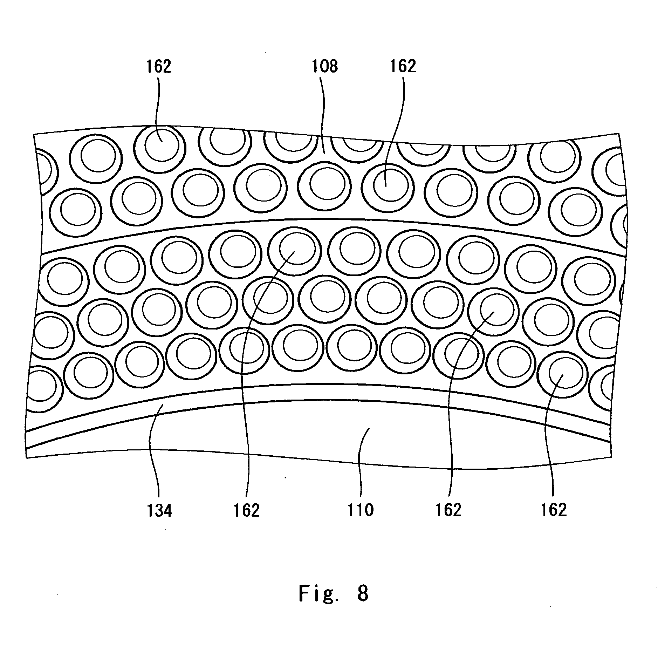

FIG. 8 is a front view illustrating a portion of a sidewall 108 of a tire according to still another example. FIG. 8 shows multiple dimples 162. The surface shape of each dimple 162 is a circle. In the present example, the surface shape represents a shape of the contour of each dimple 162 as viewed at infinity. Components of the tire other than the dimples 162 are the same as those of the tire 2 shown in FIG. 1.

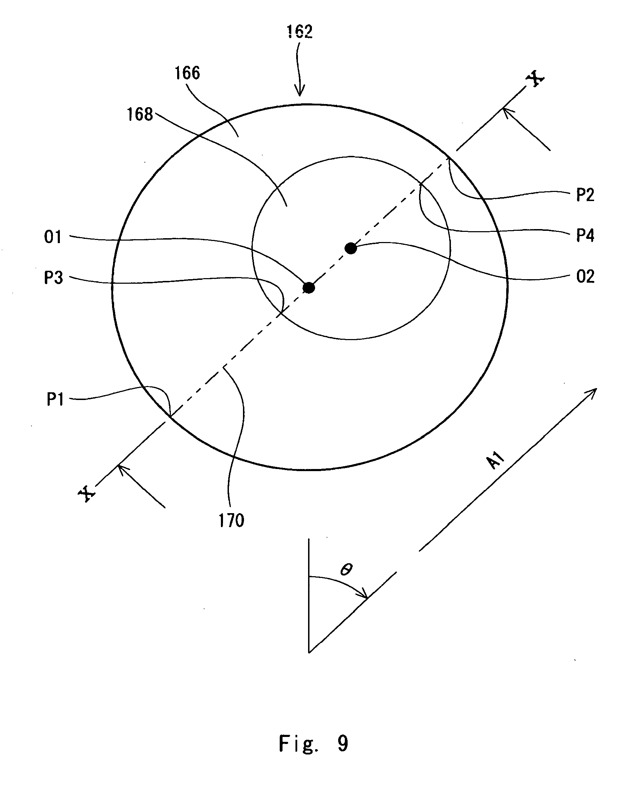

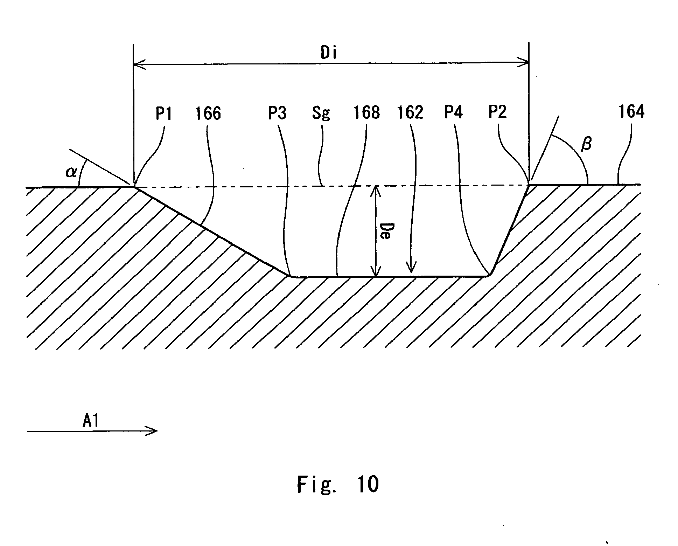

FIG. 9 is an enlarged front view illustrating a portion of the sidewall 108 shown in FIG. 8. FIG. 10 is a cross-sectional view taken along a line X-X shown in FIG. 9. In FIG. 9, the upward/downward direction represents the tire radial direction. As shown in FIG. 10, each dimple 162 is recessed. A region, on the side surfaces, other than the dimples 162 is a land 164.

The surface area of the side surfaces including the dimples 162 is greater than a surface area of the side surfaces, which is estimated on the assumption that the side surfaces do not include the dimples 162. An area of contact between the tire and the air is great. The great area of contact allows promotion of release of heat from the tire to the air.

As shown in FIG. 10, each dimple 162 includes a slope surface 166 and a bottom surface 168. The slope surface 166 is ring-shaped. The slope surface 166 extends from the edge of the dimple 162 to the bottom surface 168. The slope surface 166 is sloped from the edge toward the center of the dimple 162 in the depth direction. The bottom surface 168 is flat. The contour of the bottom surface 168 represents a circle.

As is apparent from FIG. 9 and FIG. 10, the center 02 of the circle that defines the contour of the bottom surface 168 deviates from the center 01 of the circle that defines the contour of the dimple 162. The dimple 162 is referred to as an "offset type" dimple in the specification of the present example. In FIG. 9, a straight line denoted by reference numeral 170 passes through the center 02, and further passes through the center 01. An arrow A1 indicated in FIG. 9 represents an estimated airflow direction. The flow direction A1 will be described below in detail. The direction of the line section 170 matches with the flow direction A1. In FIG. 9, reference character $\theta$ represents an angle of the flow direction A1 relative to the tire radial direction. The angle $\theta$ is greater than or equal to 0 degrees, and is less than 360 degrees. The center 02 of the bottom surface 168 is located in the downstream of the center O1 of the dimple 162 in the airflow direction A1.

A point P1 shown in FIG. 9 represents an intersection of the straight line 170 and the circle that defines the contour of the dimple 162. The point P1 is located in the upstream of the center O1 of the dimple 162 in the flow direction A1. A point P2 represents an intersection of the straight line 170 and the circle that defines the contour of the dimple 162. The point P2 is located in the downstream of the center O1 of the dimple 162 in the flow direction A1. A point P3 represents an intersection of the straight line 170 and the circle that defines the contour of the bottom surface 168. The point P3 is located in the upstream of the center O2 of the bottom surface 168 in the flow direction A1. A point P4 represents an intersection of the straight line 170 and the circle that defines the contour of the bottom surface 168. The point P4 is located in the downstream of the center 02 of the bottom surface 168 in the flow direction A1. A distance between the point P1 and the point P3 is longer than a distance between the point P4 and the point P2.

In FIG. 10, reference character $\alpha$ represents an angle of the slope surface 166 relative to the land 164 located on the upstream side in the flow direction A1. Reference character $\beta$ represents an angle of the slope surface 166 relative to the land 164 located on the downstream side in the flow direction A1. The angle $\alpha$ is smaller than the angle $\beta$.

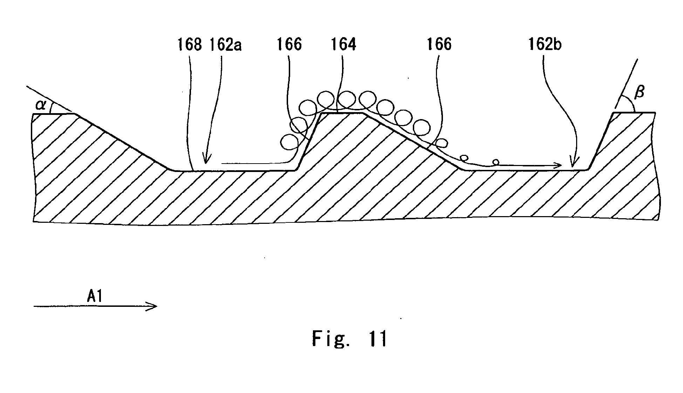

FIG. 11 shows two dimples 162a and 162b. Air flowing along the bottom surface 168 of the dimple 162a collides against a downstream portion of the slope surface 166. Vortexes are generated due to the collision. In other words, turbulent flow is generated in the downstream portion of the slope surface 166. Since the angle $\beta$ is great in this portion, sufficient turbulent flow is generated. As shown in FIG. 11, the turbulent flow moves along the land 164, and reaches the adjacent dimple 162b. The turbulent flow moves along an upstream portion of the slope surface 166 of the dimple 162b. Since the angle $\alpha$ is small in this portion, the turbulent flow is less likely to separate from the dimple 162. Due to the slope surface 166 in which the angle $\alpha$ is small, an area of contact between the surface of the tire and the turbulent flow is increased. The turbulent flow further moves along the bottom surface 168. Since the bottom surface 168 is flat, the turbulent flow is less likely to separate from the dimple 162. An area of contact between the surface of the tire and the turbulent flow is increased due to the bottom surface 168 being flat.

When running with a tire in a punctured state is continued, deformation and restoration of the support layers are repeated. Due to this repetition, heat is generated in the support layers. The heat is conveyed to the sidewalls 108 and the clinch sections. The turbulent flow generated in the dimple 162 allows promotion of release of the heat to the air. Since an area of contact between the surface of the tire and the turbulent flow is great, heat is sufficiently released. In this tire, breakage of rubber components and separation among rubber components which are caused due to heat are reduced. This tire enables long time running in a punctured state. The turbulent flow also contributes to heat release in a normal state. The dimples 162 also contribute to durability of the tire in a normal state. Running in a state where an internal pressure is less than a normal value may be inadvertently caused by a driver. The dimples 162 can also contribute to durability in this case.

Since the dimples 162 allow rise of temperature in the tire to be reduced, even if the support layers are thin, long time running in a punctured state is enabled. The thin support layers allow reduction in weight of the tire. The thin support layers enable reduction of a rolling resistance. The tire which has a light weight and a reduced rolling resistance contributes to reduction in fuel consumption of vehicles. Further, the thin support layers also enable excellent ride comfort.

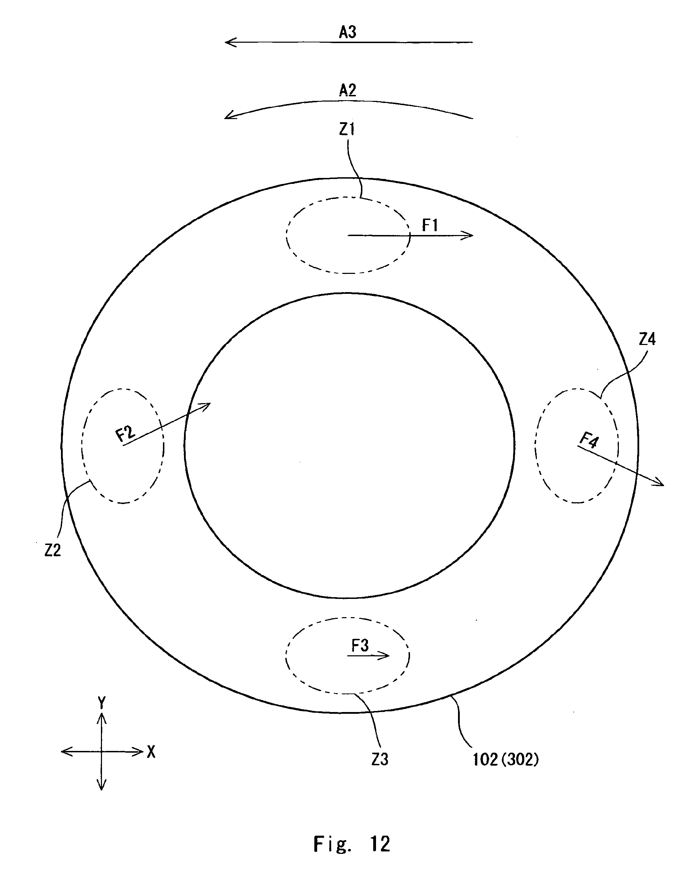

In FIG. 12, an arrow A2 represents a tire rotating direction, and an arrow A3 represents a vehicle travelling direction. In a zone Z1, air flows in the X direction by the rotation of the tire, and air flows in the X direction by the travelling of the vehicle. An arrow F1 represents a flowing direction which is obtained by combination in the zone Z1. In a zone Z2, air flows in the Y direction by the rotation of the tire, and air flows in the X direction by the travelling of the vehicle. An arrow F2 represents a flowing direction which is obtained by combination in the zone Z2. In a zone Z3, air flows in the -X direction by the rotation of the tire, and air flows in the X direction by the travelling of the vehicle. An arrow F3 represents a flowing direction which is obtained by combination in the zone Z3. In a zone Z4, air flows in the -Y direction by the rotation of the tire, and air flows in the X direction by the travelling of the vehicle. An arrow F4 represents a flowing direction which is obtained by combination in the zone Z4.

The rotating tire includes a zone which greatly contributes to heat release. In consideration of influence of positions of the dimples 162, the size of each tire, the shape of the tire in a punctured state, the shapes of fenders of the vehicle, the shapes of wheels, positions at which the tires are mounted to the vehicle, and the like, a zone which greatly contributes to heat release is determined. An estimated airflow direction A1 (see FIG. 9) is determined so as to approximately match with the flowing direction which is obtained by the combination in this zone.

The angle $\alpha$ is preferably greater than or equal to 15 degrees, and is preferably not greater than 70 degrees. The dimples 162 each having the angle $\alpha$ greater than or equal to 15 degrees, have the depth De which is sufficient. In this viewpoint, the angle $\alpha$ is more preferably greater than or equal to 20 degrees, and is particularly preferably greater than or equal to 25 degrees. In the dimples 162 each having the angle $\alpha$ less than or equal to 70 degrees, turbulent flow is less likely to separate. In this viewpoint, the angle $\alpha$ is more preferably less than or equal to 50 degrees, and is particularly preferably less than or equal to 35 degrees.

The angle $\beta$ is preferably greater than or equal to 50 degrees, and is preferably not greater than 90 degrees. In the dimples 162 each having the angle $\beta$ greater than or equal to 50 degrees, turbulent flow is sufficiently generated. In this viewpoint, the angle $\beta$ is more preferably greater than or equal to 60 degrees, and is particularly preferably greater than or equal to 65 degrees. A tire which includes the dimples 162 each having the angle $\beta$ less than or equal to 90 degrees can be easily produced.

In the viewpoint of sufficient generation of the turbulent flow and reduction of separation of the turbulent flow, a difference $(\beta-\alpha)$ is preferably greater than or equal to 20 degrees, and is particularly preferably greater than or equal to 30 degrees. The difference $(\beta-\alpha)$ is preferably less than or equal to 60 degrees.

An alternate long and two short dashes line Sg in FIG. 10 represents a line segment extending from one edge P1 of the dimple 162 to the other edge P2 of the dimple 162. In FIG. 10, an arrow Di represents the length of the line segment Sg, and the diameter of the dimple 162. The diameter Di is preferably greater than or equal to 2 mm, and is preferably not greater than 70 mm. Into the dimples 162 each having the diameter Di greater than or equal to 2 mm, air sufficiently flows, thereby sufficiently generating the turbulent flow. The dimples 162 allow rise of temperature in the tire to be reduced. In this viewpoint, the diameter Di is more preferably greater than or equal to 4 mm, and is particularly preferably greater than or equal to 6 mm. In the tire which includes the dimples 162 each having the diameter Di less than or equal to 70 mm, turbulent flow is likely to be generated in many places. Further, in the tire which includes the dimples 162 each having the diameter Di less than or equal to 70 mm, the surface area of the side surfaces is great. The great surface area allows promotion of release of heat from the tire. The dimples 162 allow rise of temperature in the tire to be reduced. In this viewpoint, the diameter Di is more preferably less than or equal to 50 mm, and is particularly preferably less than or equal to 30 mm. The tire may include two or more kinds of dimples which have the diameters Di representing different values.

In FIG. 10, an arrow De represents the depth of the dimple 162. The depth De represents a distance between the deepest portion of the dimple 162 and the line segment Sg. The depth De is preferably greater than or equal to 0.2 mm, and is preferably not greater than 7 mm. In the dimples 162 each having the depth De greater than or equal to 0.2 mm, sufficient turbulent flow is generated. In this viewpoint, the depth De is more preferably greater than or equal to 0.5 mm, and is particularly preferably greater than or equal to 1.0 mm. In the dimples 162 each having the depth De less than or equal to 7 mm, air is less likely to be accumulated at the bottom. Further, in the tire in which the depth De is less than or equal to 7 mm, the sidewalls 108, the clinch sections, and the like each have a sufficient thickness. In this viewpoint, the depth De is more preferably less than or equal to 4 mm, and is particularly preferably less than or equal to 3.0 mm. The tire may include two or more kinds of dimples which have the depths De representing different values.

The volume of the dimple 162 is preferably greater than or equal to 1.0 $mm^3$, and is preferably not greater than 400 $mm^3$. In the dimples 162 each having the volume greater than or equal to 1.0 $mm^3$. sufficient turbulent flow is generated. In this viewpoint, the volume is more preferably greater than or equal to 1.5 $mm^3$, and is particularly preferably greater than or equal to 2.0 $mm^3$. In the dimples 162 each having the volume less than or equal to 400 $mm^3$, air is less likely to be accumulated at the bottom. Further, in the tire which includes the dimples 162 each having the volume less than or equal to 400 $mm^3$, the sidewalls 108, the clinch sections, and the like each have a sufficient stiffness. In this viewpoint, the volume is more preferably less than or equal to 300 mm$^3$, and is particularly preferably less than or equal to 250 mm$^3$.

The total value of the volumes of all the dimples 162 is preferably greater than or equal to 300 mm$^3$, and is preferably not greater than 5000000 mm$^3$. In the tire in which the total value is greater than or equal to 300 mm$^3$, sufficient heat release occurs. In this viewpoint, the total value is more preferably greater than or equal to 600 mm$^3$, and is particularly preferably greater than or equal to 800 mm$^3$. In the tire in which the total value is less than or equal to 5000000 mm$^3$, the sidewalls 108, the clinch sections, and the like each have a sufficient stiffness. In this viewpoint, the total volume is more preferably less than or equal to 1000000 mm$^3$, and is particularly preferably less than or equal to 500000 mm$^3$.

The area of the dimple 162 is preferably greater than or equal to 3 mm$^2$, and is preferably not greater than 4000 mm$^2$. In the dimples 162 each having the area greater than or equal to 3 mm$^2$, sufficient turbulent flow is generated. In this viewpoint, the area is more preferably greater than or equal to 12 mm$^2$, and is particularly preferably greater than or equal to 20 mm$^2$. In the tire which includes the dimples 162 each having the area less than or equal to 4000 mm$^2$, the sidewalls 108, the clinch sections, and the like each have a sufficient strength. In this viewpoint, the area is more preferably less than or equal to 2000 mm$^2$, and is particularly preferably less than or equal to 1300 mm$^2$. In the present example, the area of the dimple 162 represents an area of a region surrounded by the contour of the dimple 162. In the case of the dimple 162 which is circle-shaped, an area S is calculated by using the following equation.

$$S=(Di/2)^2 * \pi$$

In the present example, an occupancy ratio Y of the dimples 162 is calculated by using the following equation.

$$Y=(S1/S2) * 100$$

In this equation, S1 represents the areas of the dimples 162 included in a reference region, and S2 represents a surface area of the reference region, which is estimated on the assumption that the reference region does not include the dimples 162. The reference region represents a region, on the side surfaces, having a height from the reference line BL that is higher than or equal to 20% of the height H of the tire, and is not higher than 80% thereof. The occupancy ratio Y is preferably greater than or equal to 10%, and is preferably not greater than 85%. In the tire having the occupancy ratio Y greater than or equal to 10%, sufficient heat release occurs. In this viewpoint, the occupancy ratio Y is more preferably greater than or equal to 30%, and is particularly preferably greater than or equal to 40%. In the tire having the occupancy ratio Y less than or equal to 85%, the land 164 has a sufficient abrasion resistance. In this viewpoint, the occupancy ratio Y is more preferably less than or equal to 80%, and is particularly preferably less than or equal to 75%.

The width (smallest value) of the land 164 between the dimples 162 adjacent to each other is preferably greater than or equal to 0.05 mm, and is preferably not greater than 20 mm. In the tire in which the width is greater than or equal to 0.05 mm, the land 164 has a sufficient abrasion resistance. In this viewpoint, the width is more preferably greater than or equal to 0.10 mm, and is particularly preferably greater than or equal to 0.2 mm. In the tire in which the width is less than or equal to 20 mm, turbulent flow is likely to be generated in many places. In this viewpoint, the width is more preferably less than or equal to 15 mm, and is particularly preferably less than or equal to 10 mm.

The total number of the dimples 162 is preferably greater than or equal to 50, and is preferably not greater than 5000. In the tire in which the total number is greater than or equal to 50, turbulent flow is likely to be generated in many places. In this viewpoint, the total number is more preferably greater than or equal to 100, and is particularly preferably greater than or equal to 150. In the tire in which the total number is less than or equal to 5000, each dimple 162 can have a sufficient size. In this viewpoint, the total number is more preferably less than or equal to 2000, and is particularly preferably less than or equal to 1000. The total number and the pattern of the dimples 162 can be determined as necessary according to the size of the tire and the area of the side portions.

The tire may include dimples which are not of the offset type in addition to the dimples 162 which are of the offset type. A ratio of the number of the dimples 162 which are of the offset type, to the total number of dimples is preferably greater than or equal to 30%, and is particularly preferably greater than or equal to 50%. The tire may have projecting portions in addition to the dimples 162.

When the dimples 162 each have the size and the shape as described above, and the total number of the dimples 162 is as described above, their effects are exerted in the tires which are various in size. In the tire for use in passenger cars, the dimples 162 particularly exert their effects when the width of the tire is greater than or equal to 100 mm, and is not greater than 350 mm, and the aspect ratio of the tire is greater than or equal to 30%, and is not greater than 100%, and the diameter of the rim is greater than or equal to 10 inches, and is not greater than 25 inches.

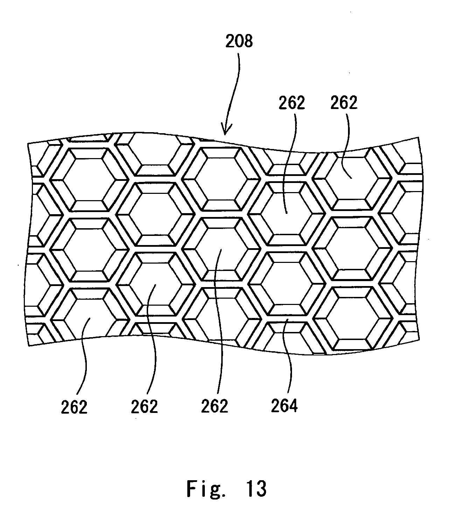

FIG. 13 is a perspective view illustrating a portion of a sidewall 208 of a tire according to still another example. FIG. 13 shows multiple dimples 262. The surface shape of each dimple 262 is a regular hexagon. In the present example, the surface shape represents a shape of the contour of each dimple 262 as viewed at infinity.

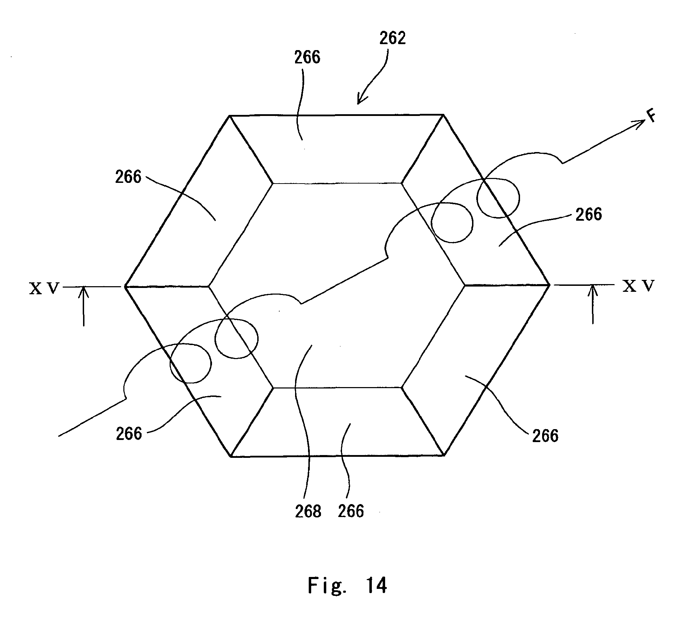

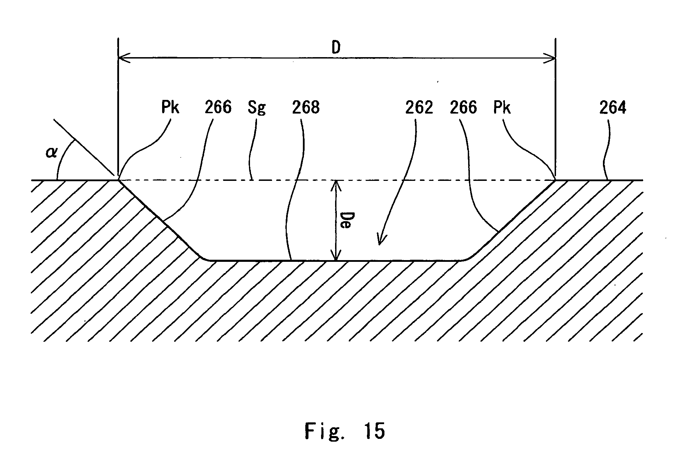

FIG. 14 is an enlarged front view illustrating a portion of the sidewall 208 shown in FIG. 13. FIG. 15 is a cross-sectional view taken along a line XV-XV shown in FIG. 14. As shown in FIG. 15, each dimple 262 is recessed. A region, on the side surfaces, other than the dimples 262 is a land 264.

The surface area of the side surfaces including the dimples 262 is greater than a surface area of the side surfaces, which is estimated on the assumption that the side surfaces do not include the dimples 262. An area of contact between the tire and the air is great. The great area of contact allows promotion of release of heat from the tire to the air.

As shown in FIG. 15, each dimple 262 includes six slope surfaces 266 and a bottom surface 268. Each slope surface 266 is sloped relative to the tire radial direction. Each slope surface 266 extends from an edge Ed of the dimple 262 to the bottom surface 268. The bottom surface 268 is flat. The contour of the bottom surface 268 represents a substantially regular hexagonal shape.

In FIG. 14, airflow around the tire is represented by reference character F. The tire rotates during running. A vehicle having the tire mounted thereto travels. Air flows across the dimples 262 by the rotation of the tire and the travelling of the vehicle. Air flows along the land 264 (see FIG. 15), flows along the slope surface 266, and flows into the bottom surface 268. The air flows through the dimple 262, flows along the slope surface 266 located on the downstream side, and flows out of the dimple 262. The air further flows along the land 264 located on the downstream side, and flows into the adjacent dimple 262.

As shown in FIG. 14, when air passes through the slope surface 266, vortexes are generated in the airflow. In other words, turbulent flow is generated at the entrance to and exit of the dimple 262. When running with a tire in a punctured state is continued, deformation and restoration of the support layers 16 are repeated. Due to the repletion, heat is generated in the support layers 16. The heat is conveyed to the sidewalls 208 and the clinch sections. The turbulent flow generated in the dimples 262 allows promotion of release of the heat to the air. In this tire, breakage of rubber components and separation among rubber components which are caused due to heat are reduced. This tire enables long time running in a punctured state. The turbulent flow also contributes to heat release in a normal state. The dimples 262 also contribute to durability of the tire in a normal state. Running in a state where an internal pressure is less than a normal value may be inadvertently caused by a driver. The dimples 262 can also contribute to durability in this case.

The air in which vortexes are generated flows along the slope surfaces 266 and the bottom surface 268 in the dimple 262. The air smoothly flows out of the dimple 262. The bottom surface 268 which is flat promotes smooth flowing-out. In this tire, air accumulation which may occur in conventional tires having projecting portions, and conventional tires having grooves is less likely to occur. Therefore, prevention of heat release due to air accumulation may not occur. This tire is extremely excellent in durability.

In this tire, the dimples 262 allow rise of temperature to be reduced. Therefore, even if the support layers are thin, long time running in a punctured state is enabled. The thin support layers allow reduction in weight of the tire. The thin support layers enable reduction of a rolling resistance. The tire which has a light weight and a reduced rolling resistance contributes to reduction in fuel consumption of vehicles. Further, the thin support layers enable excellent ride comfort.

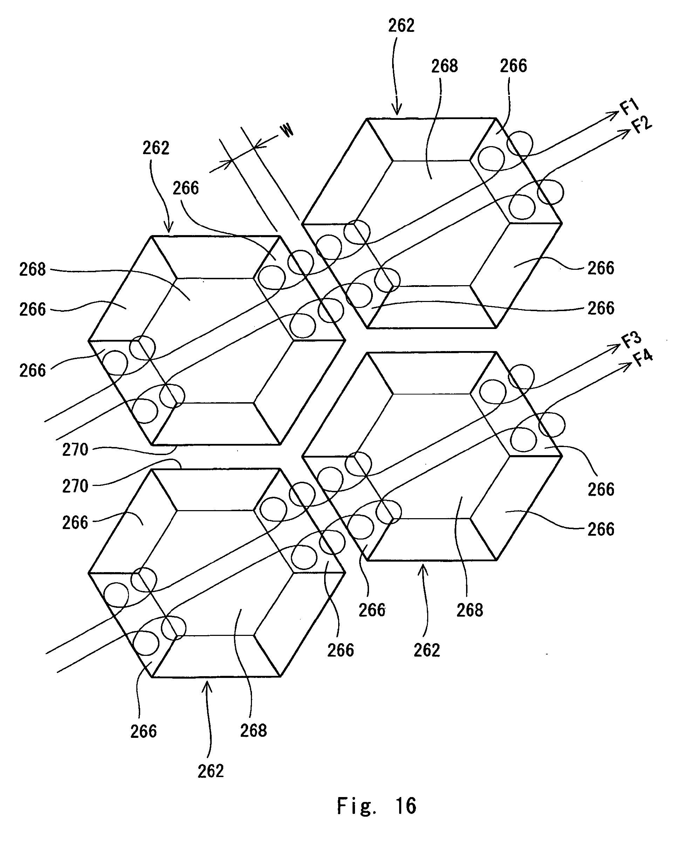

As is apparent from FIG. 16, one of sides 270 of one of the dimples 262 is positioned so as to be substantially parallel to another side 270 which is adjacent to the one of the sides 270 and which is included in another one of the dimples 262. Therefore, the width W of the land 264 is substantially uniform. The dimple pattern in which the width W is uniform cannot be obtained by circular dimples. Since the width W is uniform, an airflow F2 is similar to a flow F1. Similarly, a flow F3 is similar to the flow F1, and a flow F4 is similar to the flow F1. In this tire, heat is efficiently released.

The sidewalls 208 and the clinch sections are each annular. The dimples 262 are positioned along the circumferential direction. Therefore, one of the sides 270 of one of the dimples 262 is not strictly parallel to another side 270 which is adjacent to the one of the sides 270 and which is included in another one of the dimples 262. In the present example, this state is referred to as "substantially parallel". Since the one of the sides 270 and the other side 270 are not strictly parallel to each other, the width W is not strictly uniform. In the present example, this state is referred to as "substantially uniform".

In the pattern including circular dimples, even in a case where these dimples are densely positioned, a land surrounded by three dimples is formed. The area of the land is great. Therefore, the density of the dimples is not high. When dimples each having a polygonal surface shape are positioned, a pattern in which the number of lands each having a great area is reduced can be obtained. The density of the dimples in this pattern is high. Therefore, heat is efficiently released. Dimples each having a surface shape which is a regular polygon are preferable because of excellent symmetric property. In the viewpoint of achievement of high density, the dimples each having a surface shape which is a regular triangle, a square, or a regular hexagon are preferable. In the viewpoint of the symmetric property and density, the dimples 262 each having a surface shape which is a regular hexagon are most preferable.

In FIG. 15, an alternate long and two short dashes line Sg represents a line segment extending from one of vertexes Pk of the dimple 262 to the other of the vertexes Pk thereof. In FIG. 15, an arrow D represents the length of the line segment Sg, and the size of each dimple 262. When the surface shape is a regular polygon including an even number of vertexes, the size D represents the length from one of the vertexes Pk to the opposing one of the vertexes Pk. When the surface shape is a regular polygon including an odd number of vertexes, the size D represents the length of a line extending from one of the vertexes Pk so as to be perpendicular to the side 270 opposite to the one of the vertexes.

The size D is preferably greater than or equal to 2 mm, and is preferably not greater than 70 mm. Into the dimples 262 each having the size D greater than or equal to 2 mm, air sufficiently flows, thereby sufficiently generating turbulent flow. The dimples 262 allow rise of temperature in the tire to be reduced. In this viewpoint, the size D is more preferably greater than or equal to 4 mm, and is particularly preferably greater than or equal to 6 mm. In the tire which includes the dimples 262 each having the size D less than or equal to 70 mm, turbulent flow is likely to be generated in many places. Further, in the tire which includes the dimples 262 each having the size D less than or equal to 70 mm, the surface area of the side surfaces is great. The great surface area allows promotion of release of heat from the tire. The dimples 262 allow rise of temperature in the tire to be reduced. In this viewpoint, the size D is more preferably less than or equal to 50 mm, and is particularly preferably less than or equal to 30 mm. The tire may include two or more kinds of dimples which have the sizes D representing different values.

In FIG. 15, an arrow De represents the depth of each dimple 262. The depth De represents a distance between the deepest portion of the dimple 262 and the line segment Sg. The depth De is preferably greater than or equal to 0.2 mm, and is preferably not greater than 7 mm. In the dimples 262 each having the depth De greater than or equal to 0.2 mm, sufficient turbulent flow is generated. In this viewpoint, the depth De is more preferably greater than or equal to 0.5 mm, and is particularly preferably greater than or equal to 1.0 mm. In the dimples 262 each having the depth De less than or equal to 7 mm, air is less likely to be accumulated at the bottom. Further, in the tire in which the depth De is less than or equal to 7 mm, the sidewalls 208, the clinch sections, and the like each have a sufficient thickness. In this viewpoint, the depth De is more preferably less than or equal to 4 mm, and is particularly preferably less than or equal to 3.0 mm. The tire may include two or more kinds of dimples which have the depths De representing different values.

The volume of the dimple 262 is preferably greater than or equal to 1.0 mm$^3$, and is preferably not greater than 400 mm$^3$. In the dimples 262 each having the volume greater than or equal to 1.0 mm$^3$, sufficient turbulent flow is generated. In this viewpoint, the volume is more preferably greater than or equal to 1.5 mm$^3$, and is particularly preferably greater than or equal to 2.0 mm$^3$. In the dimples 262 each having the volume less than or equal to 400 mm$^3$. air is less likely to be accumulated at the bottom. Further, in the tire which includes the dimples 262 each having the volume less than or equal to 400 mm$^3$, the sidewalls 208, the clinch sections, and the like each have a sufficient stiffness. In this viewpoint, the volume is more preferably less than or equal to 300 mm$^3$. and is particularly preferably less than or equal to 250 mm$^3$.

The total value of the volumes of all the dimples 262 is preferably greater than or equal to 300 mm$^3$, and is preferably not greater than 5000000 mm$^3$. In the tire in which the total value is greater than or equal to 300 mm$^3$, sufficient heat release occurs. In this viewpoint, the total value is more preferably greater than or equal to 600 mm$^3$, and is particularly preferably greater than or equal to 800 mm$^3$. In the tire in which the total value is less than or equal to 5000000 mm$^3$, the sidewalls 208, the clinch sections, and the like each have a sufficient stiffness. In this viewpoint, the total volume is more preferably less than or equal to 1000000 mm$^3$, and is particularly preferably less than or equal to 500000 mm$^3$.

The area of the dimple 262 is preferably greater than or equal to 3 mm$^2$, and is preferably not greater than 4000 mm$^2$. In the dimples 262 each having the area greater than or equal to 3 mm$^2$, sufficient turbulent flow is generated. In this viewpoint, the area is more preferably greater than or equal to 12 mm$^2$, and is particularly preferably greater than or equal to 20 mm$^2$. In the tire which includes the dimples 262 each having the area less than or equal to 4000 mm$^2$, the sidewalls 208, the clinch sections, and the like each have a sufficient strength. In this viewpoint, the area is more preferably less than or equal to 2000 mm$^2$, and is particularly preferably less than or equal to 1300 mm$^2$. In the present example, the area of each dimple 262 represents an area of a region surrounded by the contour of the dimple 262.

In the present example, an occupancy ratio Y of the dimples 262 is calculated by using the following equation.

$$Y=(S1/S2)*100$$

In this equation, S1 represents the areas of the dimples 262 included in a reference region, and S2 represents a surface area of the reference region, which is estimated on the assumption that the reference region does not include the dimples 262. The reference region represents a region, on the side surfaces, having a height from the reference line BL that is greater than or equal to 20% of the height H of the tire, and is not greater than 80% thereof. The occupancy ratio Y is preferably greater than or equal to 10%, and is preferably not greater than 85%. In the tire in which the occupancy ratio Y is greater than or equal to 10%, sufficient heat release occurs. In this viewpoint, the occupancy ratio Y is more preferably greater than or equal to 30%, and is particularly preferably greater than or equal to 40%. In the tire in which the occupancy ratio Y is less than or equal to 85%, the land 264 has a sufficient abrasion resistance. In this viewpoint, the occupancy ratio Y is more preferably less than or equal to 80%, and is particularly preferably less than or equal to 75%.

The width W of the land 264 is preferably greater than or equal to 0.05 mm, and is preferably not greater than 20 mm. In the tire in which the width is greater than or equal to 0.05 mm, the land 264 has a sufficient abrasion resistance. In this viewpoint, the width is more preferably greater than or equal to 0.10 mm, and is particularly preferably greater than or equal to 0.2 mm. In the tire in which the width is less than or equal to 20 mm, turbulent flow is likely to be generated in many places. In this viewpoint, the width is more preferably less than or equal to 15 mm, and is particularly preferably less than or equal to 10 mm.

The total number of the dimples 262 is preferably greater than or equal to 50, and is preferably not greater than 5000. In the tire in which the total number is greater than or equal to 50, turbulent flow is likely to be generated in many places. In this viewpoint, the total number is more preferably greater than or equal to 100, and is particularly preferably greater than or equal to 150. In the tire in which the total number is less than or equal to 5000, each dimple 262 can have a sufficient size. In this viewpoint, the total number is more preferably less than or equal to 2000, and is particularly preferably less than or equal to 1000. The total number and the pattern of the dimples 262 can be determined as necessary according to the size of the tire and the area of the side portions.

The tire may have, in addition to the dimples 262 each having a polygonal surface shape, dimples each having another surface shape. Examples of the other surface shape include a circle, an ellipse, an elongated circle, and a tear-like shape (tear drop type). A ratio of the number of the dimples 262 each having the polygonal surface shape, to the total number of dimples is preferably greater than or equal to 30%, and is particularly preferably greater than or equal to 50%. The tire may have projecting portions in addition to the dimples 262.

As shown in FIG. 15, the cross-sectional shape of each dimple 262 is a trapezoid. In these dimples 262, the volume is great relative to the depth De. Therefore, both the sufficient volume and the shallow depth De can be realized. When the depth De is set so as to be shallow, each of the sidewalls 208, the clinch sections, and the like can have a sufficient thickness immediately below each dimple 262. The dimples 262 can contribute to stiffness of the side surfaces.

In FIG. 15, reference character $\alpha$ represents an angle of each slope surface 266. The angle $\alpha$ is preferably greater than or equal to 10 degrees, and is preferably not greater than 70 degrees. In the dimples 262 each having the angle $\alpha$ greater than or equal to 10 degrees, both the sufficient volume and the shallow depth De can be realized. In this viewpoint, the angle $\alpha$ is more preferably greater than or equal to 20 degrees, and is particularly preferably greater than or equal to 25 degrees. In the dimples 262 each having the angle $\alpha$ less than or equal to 70 degrees, air smoothly flows. In this viewpoint, the angle $\alpha$ is more preferably less than or equal to 60 degrees, and is particularly preferably less than or equal to 55 degrees.

When the dimples 262 each have the size and the shape as described above, and the total number of the dimples 262 is as described above, their effects are exerted in the tires which are various in size. In the tire for use in passenger cars, the dimples 262 particularly exert their effects when the width of the tire is greater than or equal to 100 mm, and is not greater than 350 mm, and the aspect ratio of the tire is greater than or equal to 30%, and is not greater than 100%, and the diameter of the rim is greater than or equal to 10 inches, and is not greater than 25 inches.

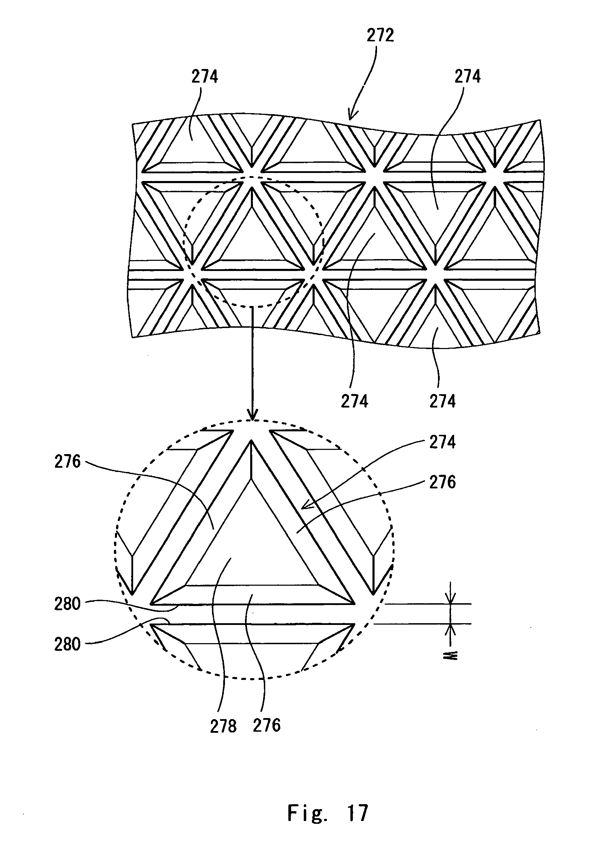

FIG. 17 is a front view illustrating a portion of a tire according to still another example. FIG. 17 shows any one of sidewalls 272. Each sidewall 272 includes multiple dimples 274. Components of the tire other than the dimples 274 are the same as those of the tire 2 shown in FIG. 1.

The surface shape of each dimple 274 is a regular triangle. Each dimple 274 includes three slope surfaces 276 and a bottom surface 278. Similarly to the dimple 262 shown in FIG. 15, each slope surface 276 is sloped relative to the tire radial direction. The slope surface 276 extends from an edge of the dimple 274 to the bottom surface 278. The bottom surface 278 is flat. The contour of the bottom surface 278 represents a substantially regular triangle. The specifications such as the size D, the depth De, the angle $\alpha$, the volume, and the area of each dimple 274 are the same as those of the dimple 262 shown in FIG. 14 and FIG. 15.

As is apparent from FIG. 17, one of sides 280 of one of the dimples 274 is positioned so as to be substantially parallel to another side 280 which is adjacent to the one of the sides 280 and which is included in another one of the dimples 274. Therefore, the width W of the land is substantially uniform. The dimples 274 are densely positioned. Turbulent flow generated in the dimples 274 allows heat release to be promoted. The tire is excellent in durability.

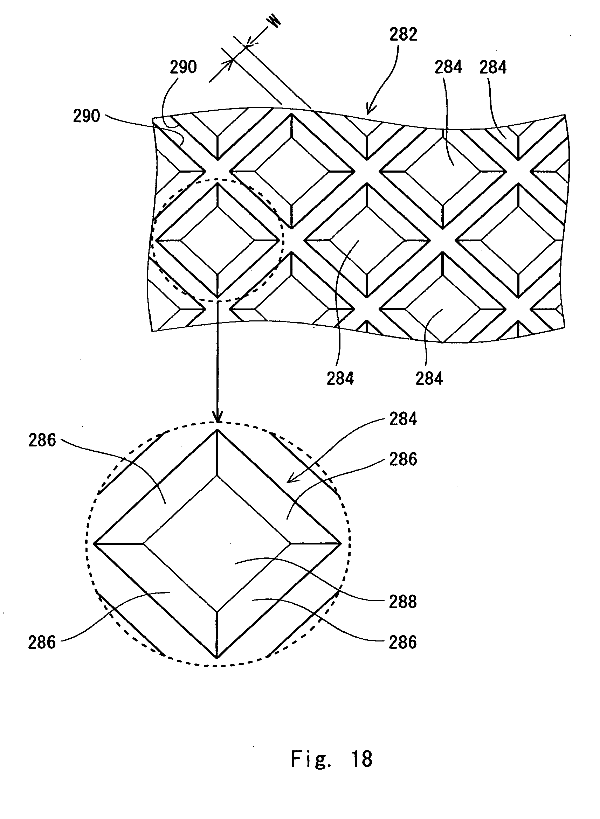

FIG. 18 is a front view illustrating a portion of a tire according to still another example. FIG. 18 shows any one of sidewalls 282. Each sidewall 282 includes multiple dimples 284. Components of the tire other than the dimples 284 are the same as those of the tire shown in FIG. 1.

The surface shape of each dimple 284 is a square. Each dimple 284 includes four slope surfaces 286 and a bottom surface 288. Similarly to the dimple 262 shown in FIG. 15, each slope surface 286 is sloped relative to the tire radial direction. The slope surface 286 extends from an edge of the dimple 284 to the bottom surface 288. The bottom surface 288 is flat. The contour of the bottom surface 288 represents a substantially square shape. The specifications such as the size D, the depth De, the angle α, the volume, and the area of each dimple 284 are the same as those of the dimple 262 shown in FIG. 14 and FIG. 15.

As is apparent from FIG. 18, one of sides 290 of one of the dimples 284 is positioned so as to be substantially parallel to another side 290 which is adjacent to the one of the sides 290 and is included in another one of the dimples 284. Therefore, the width W of the land is substantially uniform. The dimples 284 are densely positioned. Turbulent flow generated in the dimples 284 allows heat release to be promoted. The tire is excellent in durability.

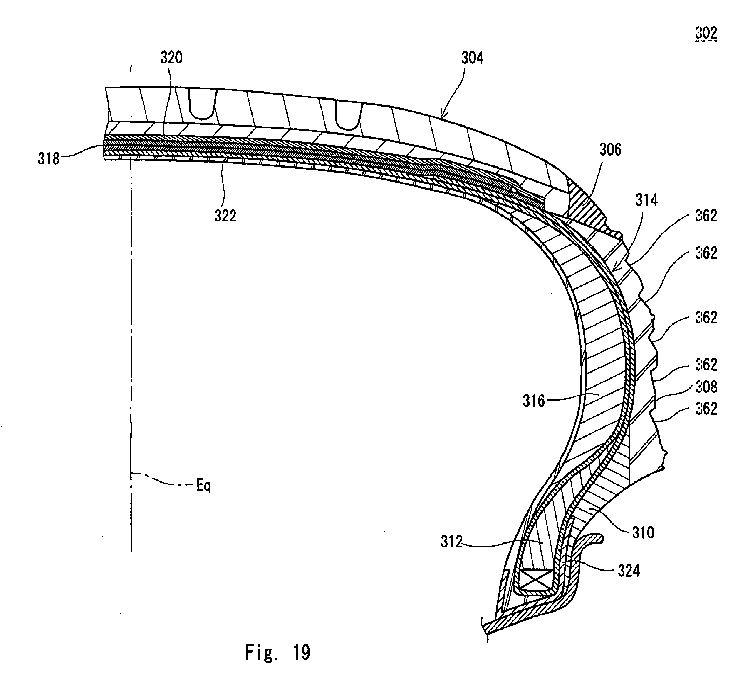

FIG. 19 is a cross-sectional view illustrating a portion of a pneumatic tire 302 according to still another example. The tire 302 includes a tread 304, wings 306, sidewalls 308, clinch sections 310, beads 312, a carcass 314, support layers 316, a belt 318, a band 320, an inner liner 322, and chafers 324, similarly to the tire 2 shown in FIG. 1.

As shown in FIG. 19, the tire 302 has a recessed and projecting pattern on the side surfaces. In the present example, the side surfaces represent regions of the outer surfaces of the tire 302 which can be viewed in the axial direction. Typically, the recessed and projecting pattern is formed on the outer surfaces of the sidewalls 308 or the outer surfaces of the clinch sections 310.

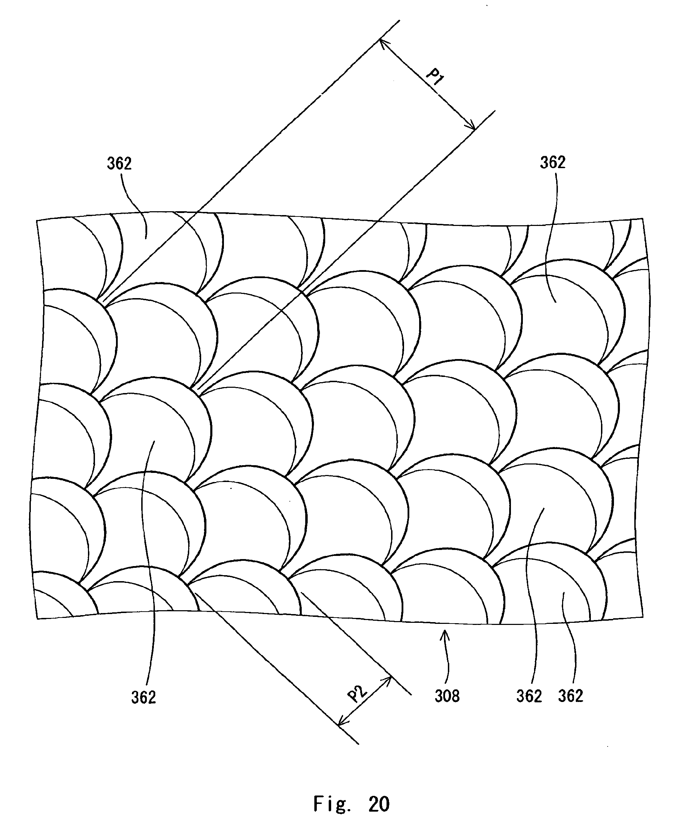

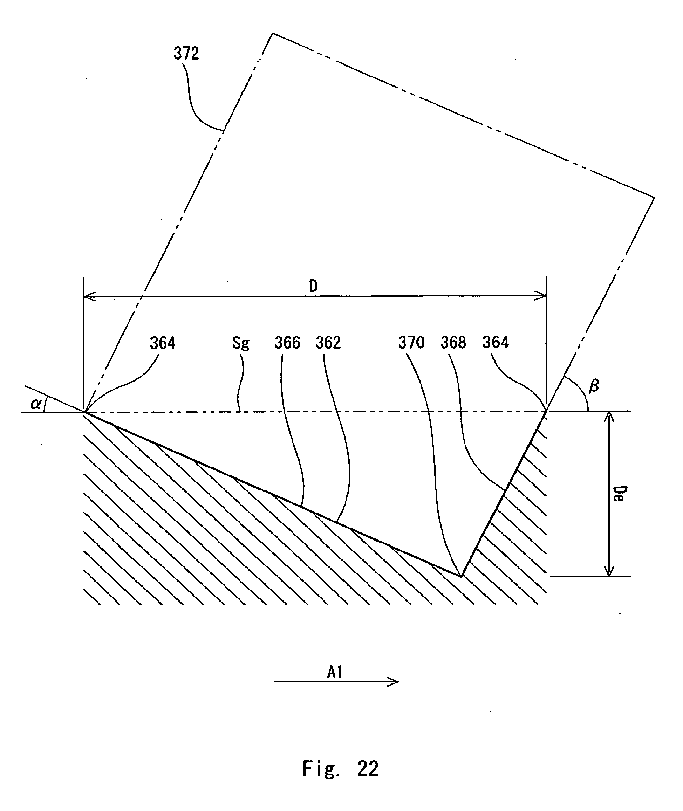

FIG. 20 is an enlarged perspective view illustrating a portion of the sidewall 308 of the tire 302 shown in FIG. 19. The recessed and projecting pattern includes multiple elements 362. As shown in FIG. 22, each element 362 is recessed. Regions, on the side surfaces, other than the elements 362 are lands 364. The recessed and projecting pattern has a pattern which looks like scales of fish.

The surface area of the side surfaces including the elements 362 is greater than a surface area of the side surfaces, which is estimated on the assumption that the side surfaces do not include the elements 362. An area of contact between the tire 302 and the air is great. The great area of contact allows promotion of release of heat from the tire 302 to the air.

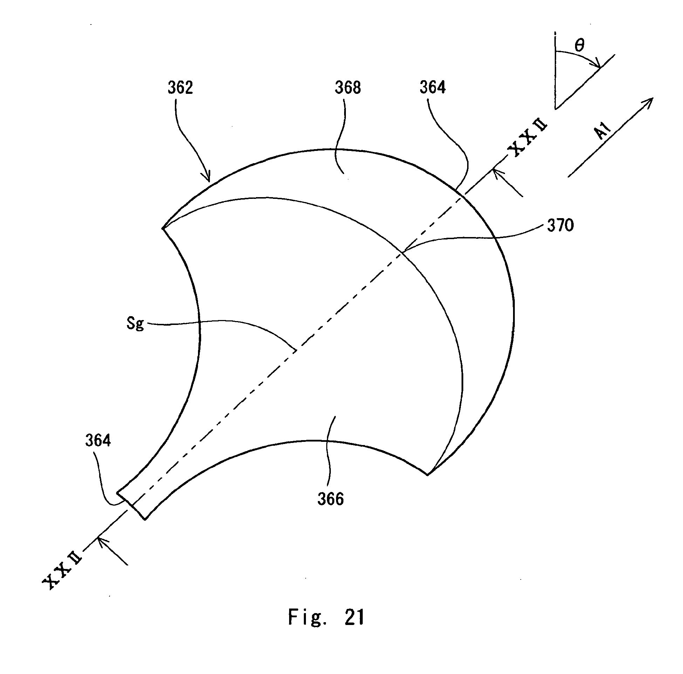

In FIG. 21, the upward/downward direction represents the radial direction of the tire 302. In FIG. 21, reference character Sg represents the longest line segment which can be drawn in the contour of the element 362. As is apparent from FIG. 21, the contour of each element 362 is symmetric about the line segment Sg. The line segment Sg represents an axis of the element 362. In FIG. 21, an arrow A1 represents a specific direction. An angle θ represents an angle of the specific direction A1 relative to the radial direction of the tire 302. In the present example, the axis Sg of the element 362 extends along the specific direction A1. The angle represented by reference character θ is the same among all the elements 362. The specific direction A1 matches with an estimated airflow direction. The flow direction will be described below in detail.

As shown in FIG. 21 and FIG. 22, each element 362 includes a first slope surface 366, a second slope surface 368, and a deepest portion 370. The first slope surface 366 extends from one of the lands 364 to the deepest portion 370. The second slope surface 368 extends from the deepest portion 370 to the other of the lands 364. The first slope surface 366 is sloped downward along the specific direction A1. The second slope surface 368 is sloped upward along the specific direction A1. FIG. 22 shows a virtual cylinder 372. The element 362 is shaped in a portion of the cylinder 372 which is obtained by the cylinder 372 being cut at a plane including the line segment Sg. The center line of the cylinder 372 is sloped relative to the plane. Multiple cylinders 372 can be virtually formed based on a first pitch P1 and a second pitch P2 shown in FIG. 20, thereby enabling the recessed and projecting pattern to be formed. Instead of the cylinders 372, for example, circular cones, circular truncated cones, prisms, pyramids, or truncated pyramids may be virtually formed.

In the recessed and projecting pattern, each land 364 is formed of a point or a line. Theoretically, the land 364 has no area. In the tire 302, the line or the point slightly has a width in practice. Therefore, the land 364 slightly has an area.

In FIG. 22, reference character α represents a slope angle of the first slope surface 366 relative to the axis Sg. Reference character β represents a slope angle of the second slope surface 368 relative to the axis Sg. The angle β is greater than the angle α.

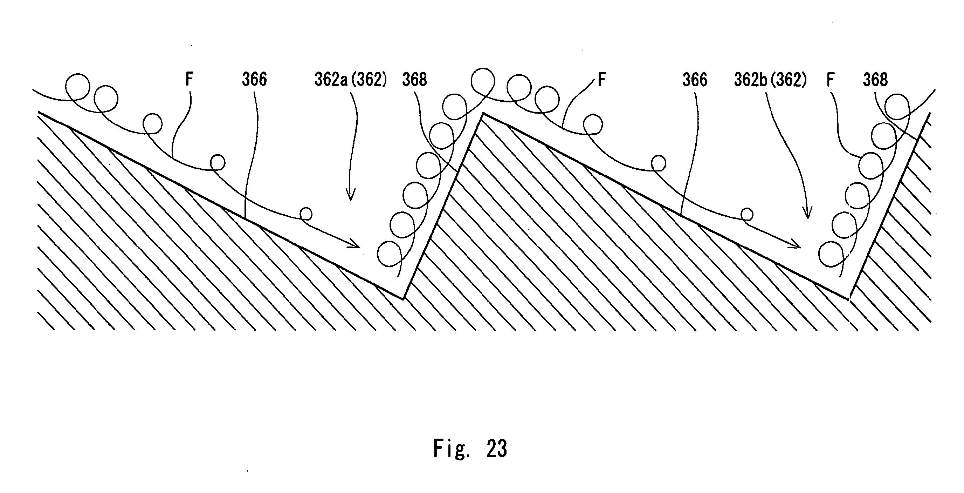

' FIG. 23 shows two elements 362a and 362b. FIG. 23 shows an airflow F around the tire 302. The tire 302 rotates during running. A vehicle having the tire 302 mounted thereto travels. Air flows across the elements 362 by the rotation of the tire 302 and the travelling of the vehicle. Air flowing along the first slope surface 366 of the element 362a collides against the second slope surface 368. Vortexes are generated due to the collision. In other words, turbulent flow is generated on the second slope surface 368. Since the angle β of the second slope surface 368 is great, sufficient turbulent flow is generated. As shown in FIG. 23, the turbulent flow moves along the first slope surface 366 of the adjacent element 362b. Since the angle α of the first slope surface 366 is small, the turbulent flow is less likely to separate from the first slope surface 366. The first slope surface 366 allows an area of contact between the surface of the tire 302 and the turbulent flow to be increased.

When running with the tire 302 in a punctured state is continued, deformation and restoration of the support layers 316 are repeated. Due to this repetition, heat is generated in the support layers 316. The heat is conveyed to the sidewalls 308 and the clinch sections 310. The turbulent flow generated in the recessed and projecting pattern allows promotion of release of the heat to the air. In the tire 302, breakage of rubber components and separation among rubber components which are caused due to heat are reduced. The tire 302 enables long time running in a punctured state.

The turbulent flow also contributes to heat release in a normal state. The recessed and projecting pattern also contributes to durability of the tire 302 in a normal state. Running in a state where an internal pressure is less than a normal value may be inadvertently caused by a driver. The recessed and projecting pattern can also contribute to durability in this case.

Since the angle $\alpha$ of the first slope surface 366 is small, air smoothly flows along the first slope surface 366. In the tire 302, air accumulation which may occur in conventional tires having projecting portions, and conventional tires having grooves is less likely to occur. Therefore, prevention of heat release due to air accumulation may not occur. The tire 302 is extremely excellent in durability.

In the tire 302, the recessed and projecting pattern allows rise of temperature to be reduced. Therefore, even if the support layers 316 are thin, long time running is enabled in a punctured state. The support layers 316 which are thin allow reduction in weight of the tire 302. The support layers 316 which are thin enable reduction of a rolling resistance. The tire 302 which has a light weight and a reduced rolling resistance contributes to reduction in fuel consumption of vehicles. Further, the support layers 316 which are thin enable excellent ride comfort.

As shown in FIG. 12, in the zone Z1, air flows in the X direction by the rotation of the tire 302, and air flows in the X direction by the travelling of the vehicle. The arrow F1 represents a flowing direction which is obtained by combination in the zone Z1. In the zone Z2, air flows in the Y direction by the rotation of the tire 302, and air flows in the X direction by the travelling of the vehicle. The arrow F2 represents a flowing direction which is obtained by combination in the zone Z2. In the zone Z3, air flows in the -X direction by the rotation of the tire 302, and air flows in the X direction by the traveling of the vehicle. The arrow F3 represents a flowing direction which is obtained by combination in the zone Z3. In the zone Z4, air flows in the -Y direction by the rotation of the tire 302, and air flows in the X direction by the travelling of the vehicle. The arrow F4 represents a flowing direction which is obtained by combination in the zone Z4.

The tire 302 which is rotating includes a zone which greatly contributes to heat release. In consideration of influence of positions of the elements 362, the size of each tire 302, the shape of the tire 302 in a punctured state, the shapes of fenders of the vehicle, the shapes of wheels, positions at which the tires 302 are mounted to the vehicle, and the like, a zone which greatly contributes to heat release is determined. An estimated airflow direction A1 (see FIG. 21) is determined so as to approximately match with the flowing direction which is obtained by the combination in this zone. In other words, the specific direction is determined.

The distance D (see FIG. 22) of the axis Sg is preferably greater than or equal to 2 mm, and is preferably not greater than 70 mm. Into the elements 362 each having the distance D greater than or equal to 2 mm, air sufficiently flows, thereby sufficiently generating turbulent flow. The elements 362 allow rise of temperature in the tire 302 to be reduced. In this viewpoint, the distance D is more preferably greater than or equal to 4 mm, and is particularly preferably greater than or equal to 6 mm. In the tire 302 which includes the elements 362 each having the distance D less than or equal to 70 mm, turbulent flow is likely to be generated in many places. Further, in the tire 302 which includes the elements 362 each having the distance D less than or equal to 70 mm, the surface area of the side surfaces is great. The great surface area allows promotion of release of heat from the tire 302. The elements 362 allow rise of temperature in the tire 302 to be reduced. In this viewpoint, the distance D is more preferably less than or equal to 50 mm, and is particularly preferably less than or equal to 30 mm. The tire 302 may include two or more kinds of the elements 362 which have the distances D representing different values.

In FIG. 22, an arrow De represents the depth of each element 362. The depth De represents a distance between the deepest portion 370 of the element 362 and the axis Sg. The depth De is preferably greater than or equal to 0.2 mm, and is preferably not greater than 7 mm. In the elements 362 each having the depth De greater than or equal to 0.2 mm, sufficient turbulent flow is generated. In this viewpoint, the depth De is more preferably greater than or equal to 0.5 mm, and is particularly preferably greater than or equal to 1.0 mm. In the elements 362 each having the depth De less than or equal to 7 mm, air is less likely to be accumulated at the deepest portion 370. Further, in the tire 302 in which the depth De is less than or equal to 7 mm, the sidewalls 308, the clinch sections 310, and the like each have a sufficient thickness. In this viewpoint, the depth De is more preferably less than or equal to 4 mm, and is particularly preferably less than or equal to 3.0 mm. The tire 302 may include two or more kinds of elements which have the depths De representing different values.

The angle $\alpha$ of the first slope surface 366 is preferably greater than or equal to 5 degrees, and is preferably not greater than 40 degrees. The elements 362 each having the angle $\alpha$ greater than or equal to 5 degrees each has a sufficient depth De. In this viewpoint, the angle $\alpha$ is more preferably greater than or equal to 10 degrees, and is particularly preferably greater than or equal to 15 degrees. In the elements 362 each having the angle $\alpha$ less than or equal to 40 degrees, air is less likely to be accumulated. In this viewpoint, the angle $\alpha$ is more preferably less than or equal to 35 degrees, and is particularly preferably less than or equal to 30 degrees.

The angle $\beta$ of the second slope surface 368 is preferably greater than or equal to 50 degrees, and is preferably not greater than 85 degrees. In the elements 362 each having the angle $\beta$ greater than or equal to 50 degrees, turbulent flow is sufficiently generated. In this viewpoint, the angle $\beta$ is more preferably greater than or equal to 55 degrees, and is particularly preferably greater than or equal to 60 degrees. In the elements 362 each having the angle $\beta$ less than or equal to 85 degrees, turbulent flow is less likely to separate. In this viewpoint, the angle $\beta$ is more preferably less than or equal to 80 degrees, and is particularly preferably less than or equal to 75 degrees.

In the viewpoint of sufficient heat release, a difference ($\beta$-$\alpha$) is preferably greater than or equal to 5 degrees, and is preferably not greater than 80 degrees, is more preferably greater than or equal to 10 degrees, and is more preferably not greater than 75 degrees, and is particularly preferably greater than or equal to 15 degrees, and is particularly preferably not greater than 70 degrees.

The volume of the element 362 is preferably greater than or equal to 1.0 mm$^3$, and is preferably not greater than 400 mm$^3$. In the elements 362 each having the volume greater than or equal to 1.0 mm$^3$, sufficient turbulent flow is generated. In this viewpoint, the volume is more preferably greater than or equal to 1.5 mm$^3$, and is particularly preferably greater than or equal to 2.0 mm$^3$. In the elements 362 each having the volume less than or equal to 400 mm$^3$, air is less likely to be accumulated at the deepest portion 370. Further, in the tire 302 which includes the elements 362 each having the volume less than or equal to 400 mm$^3$, the sidewalls 308, the clinch sections 310, and the like each have a sufficient stiffness. In this viewpoint, the volume is more preferably less than or equal to 300 mm$^3$, and is particularly preferably less than or equal to 250 mm$^3$.

The total value of the volumes of all the elements 362 is preferably greater than or equal to 300 mm$^3$, and is preferably not greater than 5000000 mm$^3$. In the tire 302 in which the total value is greater than or equal to 300 mm$^3$, sufficient heat release occurs. In this viewpoint, the total value is more preferably greater than or equal to 600 mm$^3$, and is particularly preferably greater than or equal to 800 mm$^3$. In the tire 302 in which the total value is less than or equal to 5000000 mm$^3$, the sidewalls 308, the clinch sections 310, and the like each have a sufficient stiffness. In this viewpoint, the total volume is more preferably less than or equal to 1000000 mm$^3$, and is particularly preferably less than or equal to 500000 mm$^3$.

The area of the element 362 is preferably greater than or equal to 3 mm$^2$, and is preferably not greater than 4000 mm$^2$. In the elements 362 each having the area greater than or equal to 3 mm$^2$, sufficient turbulent flow is generated. In this viewpoint, the area is more preferably greater than or equal to 12 mm$^2$, and is particularly preferably greater than or equal to 20 mm$^2$. In the tire 302 which includes the elements 362 each having the area less than or equal to 4000 mm$^2$, the sidewalls 308, the clinch sections 310, and the like each have a sufficient strength. In this viewpoint, the area is more preferably less than or equal to 2000 mm$^2$, and is particularly preferably less than or equal to 1300 mm$^2$. In the present example, the area of the element 362 represents an area of a region surrounded by the contour of the element 362.

The total number of the elements 362 is preferably greater than or equal to 50, and is preferably not greater than 5000. In the tire 302 in which the total number is greater than or equal to 50, turbulent flow is likely to be generated in many places. In this viewpoint, the total number is more preferably greater than or equal to 100, and is particularly preferably greater than or equal to 150. In the tire 302 in which the total number is less than or equal to 5000, each element 362 can have a sufficient size. In this viewpoint, the total number is more preferably less than or equal to 2000, and is particularly preferably less than or equal to 1000. The total number and the pattern of the elements 362 can be determined as necessary according to the size of the tire 302 and the area of the side portions.

When the elements 362 each have the distance and the shape as described above, and the total number of the elements 362 is as described above, their effects are exerted in the tires 302 which are various in size. In the tire 302 for use in passenger cars, the elements 362 particularly exert their effects when the width of the tire is greater than or equal to 100 mm, and is not greater than 350 mm, and the aspect ratio of the tire is greater than or equal to 30%, and is not greater than 100%, and the diameter of the rim is greater than or equal to 10 inches, and is not greater than 25 inches.

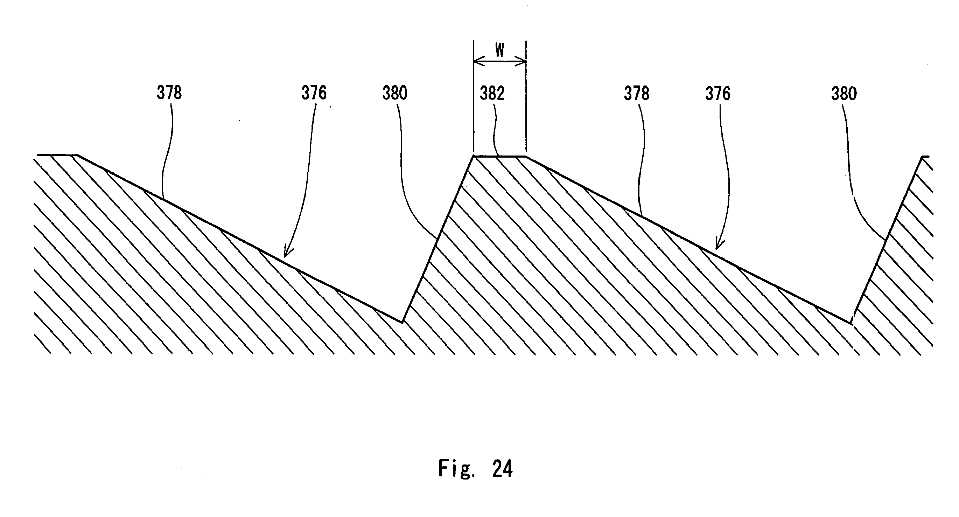

FIG. 24 is a cross-sectional view illustrating a portion of a tire according to still another example. FIG. 24 shows two of elements 376. Components of the tire other than the elements 376 are the same as those of the tire 302 shown in FIG. 19.

Similarly to the element 362 shown in FIG. 21 and FIG. 22, each element 376 includes a first slope surface 378 and a second slope surface 380. A slope angle of the second slope surface 380 is greater than a slope angle of the first slope surface 378. The second slope surface 380 enables sufficient turbulent flow to be generated. On the first slope surface 378, turbulent flow is less likely to separate.

This tire includes a land 382 between the two elements 376. The land 382 has a width W. The turbulent flow generated on the second slope surface 380 passes over the land 382, to move to the first slope surface 378 of the adjacent element 376. Since the land 382 is flat, turbulent flow is less likely to separate at the land 382. Temperature is less likely to rise in this tire.


EXAMPLES


Hereinafter, effects of the present invention will become apparent according to examples. However, the present invention should not be restrictively construed based on the description of examples.

[Experiment 1]

[Example 1]

A tire including the dimples shown in FIG. 2 to FIG. 4 was obtained. The specifications of each dimple were as follows.

Surface shape: ellipse
Length La: 8 mm
Length Li: 4 mm
Ratio (La/Li): 2/1
Depth De: 2.0 mm
Angle $\alpha$: 45 degrees
The total number of dimples: 200
The size of the tire was "245/40R18".

[Examples 2 to 5]

As tires according to examples 2 to 5, tires were obtained which were the same as described for example 1 except that the length Li and the angle $\theta$ were as indicated below in Table 1.

[Example 6]

As a tire according to example 6, a tire was obtained which was the same as described for example 1 except that the specifications of each dimple were as follows.

Surface shape: outline shape of track in athletics track field
Length La: 8 mm
Length Li: 4 mm
Ratio (La/Li): 2/1
Depth De: 2.0 mm
Angle $\alpha$: 45 degrees
The total number of dimples: 200

[Comparative example 1]

As a tire according to comparative example 1, a tire was obtained which was the same as described for example 1 except that the specifications of each dimple were as follows.

Surface shape: circle
Cross-sectional shape: circular truncated cone
Diameter: 8 mm
Depth De: 2.0 mm
Angle $\alpha$: 45 degrees
The total number of dimples: 200

[Comparative example 2]

As a tire according to comparative example 2, a tire was obtained which was the same as described for example 1 except that the tire had no dimple.

[Running test]

Tires were each assembled in a rim of "18×8.5J", and the tires were filled with air such that an internal pressure became 230 kPa. The tire was mounted to a left rear wheel of a front-engine, rear wheel drive layout passenger car which had an engine displacement of 4300 cc. A valve core was removed from the tire such that the inside of the tire communicated with the air. The tires each having an internal pressure of 230 kPa were mounted to a left front wheel, a right front wheel, and a right rear wheel of the passenger car. A driver was caused to drive this passenger car on a test course at a speed of 80 km/h. A running distance obtained when the tires were broken was measured. The result is indicated below as indexes in Table 1.

[Table 1]

Table 1 Evaluation Results

| Type | Comparative example 1 | Example 2 | Example 1 | Example 3 | Example 4 | Example 5 | Example 6 | Comparative example 2 |
|---|---|---|---|---|---|---|---|---|
| | - | FIG. 3 | FIG. 3 | FIG. 3 | FIG. 3 | FIG. 3 | FIG. 7 | - |
| Surface shape | circle | ellipse | ellipse | ellipse | ellipse | ellipse | Outline of truck | - |
| Length La (mm) | 8.0 | 8.0 | 8.0 | 8.0 | 8.0 | 8.0 | 8.0 | - |
| Length Li (mm) | 8.0 | 4.0 | 4.0 | 4.0 | 3.0 | 3.0 | 4.0 | - |
| Angle $\theta$ (degree) | - | 90 | 45 | 0 | 90 | 45 | 45 | - |
| Running distance (Index) | 100 | 105 | 107 | 103 | 104 | 103 | 106 | 82 |

As indicated in Table 1, the running distance measured with the tires according to each of examples is longer than that obtained in each of comparative examples 1 and 2. According to the evaluation results, it is apparent that the present invention is superior.

[Experiment 2]

[Example 7]

A tire including the dimples shown in FIG. 8 to FIG. 11 was obtained. The specifications of each dimple were as follows.

Contour of dimple: circle
Contour of bottom surface: circle
Angle $\alpha$: 30 degrees
Angle $\beta$: 70 degrees
Diameter Di: 12 mm
Depth De: 2.0 mm
The total number of dimples: 200
The size of the tire was "245/40R18".

[Examples 8 to 10]

As tires according to examples 8 to 10, tires were obtained which were the same as described for example 7 except that the angle $\theta$ was as indicated below in Table 2.

[Example 11 and Comparative example 3]

As tires according to example 11 and comparative example 3, tires were obtained which were the same as described for example 7 except that the angle $\alpha$ and the angle $\beta$ were as indicated below in Table 2. Dimples of the tire according to comparative example 3 were not of an offset type.

[Comparative example 4]

As a tire according to comparative example 4, a tire was obtained which was the same as described for example 7 except that the tire had no dimple.

[Running test]

Tires were each assembled in a rim of "18×8.5J", and the tires were filled with air such that an internal pressure became 230 kPa. The tire was mounted to a left rear wheel of a front-engine, rear wheel drive layout passenger car which had an engine displacement of 4300 cc. A valve core was removed from the tire such that the inside of the tire communicated with the air. The tires each having an internal pressure of 230 kPa were mounted to a left front wheel, a right front wheel, and a right rear wheel of the passenger car. A driver was caused to drive this passenger car on a test course at a speed of 80 km/h. A running distance obtained when the tires were broken was measured. The result is indicated below as indexes in Table 2.

[Table 2]

Table 2 Evaluation Results

|  | Example 8 | Example 7 | Example 9 | Example 10 | Example 11 | Comparative example 3 | Comparative example 4 |
|---|---|---|---|---|---|---|---|
| Angle $\alpha$ (degree) | 30 | 30 | 30 | 30 | 35 | 45 | - |
| Angle $\beta$ (degree) | 70 | 70 | 70 | 70 | 50 | 45 | - |
| Angle $\theta$ (degree) | 0 | 45 | 90 | 135 | 45 | - | - |

(continued)

| | Example 8 | Example 7 | Example 9 | Example 10 | Example 11 | Comparative example 3 | Comparative example 4 |
|---|---|---|---|---|---|---|---|
| Running distance (Index) | 101 | 105 | 103 | 102 | 101 | 100 | 84 |

As indicated in Table 2, the running distance measured with the tires according to each of examples is longer than that obtained in each of comparative examples 3 and 4. According to the evaluation results, it is apparent that the present invention is superior.

[Experiment 3]

[Example 12]

A tire including the dimples shown in FIG. 13 to FIG. 16 was obtained. The specifications of each dimple were as follows.

Surface shape: regular hexagon
Size D: 9.2 mm
Depth De: 2.0 mm
Angle $\alpha$: 45 degrees
Width W of land: about 2 mm
The size of the tire was "245/40R18".

[Examples 13 to 14 and Comparative example 5]

As tires according to examples 13 to 14, and comparative example 5, tires were obtained which were the same as described for example 12 except that the specifications of each dimple were as indicated below in Table 3.

[Comparative example 6]

As a tire according to comparative example 6, a tire was obtained which was the same as described for example 12 except that the tire had no dimple.

[Running test]

Tires were each assembled in a rim of "18×8.5J", and the tires were filled with air such that an internal pressure became 230 kPa. The tire was mounted to a left rear wheel of a front-engine, rear wheel drive layout passenger car which had an engine displacement of 4300 cc. A valve core was removed from the tire such that the inside of the tire communicated with the air. The tires each having an internal pressure of 230 kPa were mounted to a left front wheel, a right front wheel, and a right rear wheel of the passenger car. A driver was caused to drive this passenger car on a test course at a speed of 80 km/h. A running distance obtained when the tires were broken was measured. The result is indicated below as indexes in Table 3.
[Table 3]

Table 3 Evaluation Results

| | Comparative example 5 | Example 12 | Example 13 | Example 14 | Comparative example 6 |
|---|---|---|---|---|---|
| Type | - | FIG. 13 | FIG. 17 | FIG. 18 | - |
| Surface shape | circle | Regular hexagon | Regular triangle | square | - |
| Size D (mm) | 8 | 9.2 | 6.9 | 10.6 | - |
| Depth De (mm) | 2 | 2 | 2 | 2 | - |

(continued)

| | Comparative example 5 | Example 12 | Example 13 | Example 14 | Comparative example 6 |
|---|---|---|---|---|---|
| Angle α (degree) | 45 | 45 | 45 | 45 | - |
| Width W (mm) | various | 2 | 2 | 2 | - |
| Running distance (index) | 100 | 105 | 103 | 103 | 81 |

As indicated in Table 3, the running distance measured with the tires according to each of examples is longer than that obtained in each of comparative examples 5 and 6. According to the evaluation results, it is apparent that the present invention is superior.

[Experiment 4]

[Example 15]

A tire including the elements shown in FIG. 20 to FIG. 22 was obtained. The specifications of each element were as follows.

Angle α: 20 degrees
Angle β: 70 degrees
Angle θ: 45 degrees
Depth De: 2 mm
The size of the tire was "245/40R18".

[Examples 16 to 19 and Comparative example 7]

As tires according to examples 16 to 19, and comparative example 7, tires were obtained which were the same as described for example 15 except that the angle α and the angle β were as indicated below in Table 4.

[Example 20]

As a tire according to example 20, a tire was obtained which was the same as described for example 15 except that the angle θ was as indicated below in Table 4.

[Comparative example 8]

As a tire according to comparative example 8, a tire was obtained which was the same as described for example 15 except that the tire had no recessed and projecting pattern.

[Running test]

Tires were each assembled in a rim of "18x8.5J", and the tires were filled with air such that an internal pressure became 230 kPa. The tire was mounted to a left rear wheel of a front-engine, rear wheel drive layout passenger car which had an engine displacement of 4300 cc. A valve core was removed from the tire such that the inside of the tire communicated with the air. The tires each having an internal pressure of 230 kPa were mounted to a left front wheel, a right front wheel, and a right rear wheel of the passenger car. A driver was caused to drive this passenger car on a test course at a speed of 80 km/h. A running distance obtained when the tires were broken was measured. The result is indicated below as indexes in Table 4.
[Table 4]

Table 4 Evaluation Results

| | Example 16 | Example 17 | Example 15 | Example 18 | Example 19 | Comparative example 7 | Example 20 | Comparative example 8 |
|---|---|---|---|---|---|---|---|---|
| Angle $\alpha$ (degree) | 5 | 10 | 20 | 30 | 40 | 45 | 20 | - |
| Angle $\beta$ (degree) | 85 | 80 | 70 | 60 | 50 | 45 | 70 | - |
| Difference ($\alpha$-$\beta$) (degree) | 80 | 70 | 50 | 30 | 10 | 0 | 50 | - |
| Angle $\theta$ (degree) | 45 | 45 | 45 | 45 | 45 | 45 | 0 | - |
| Running distance (Index) | 102 | 104 | 104 | 103 | 101 | 100 | 103 | 81 |

As indicated in Table 4, the running distance measured with the tires according to each of examples is longer than that obtained in each of comparative examples 7 and 8. According to the evaluation results, it is apparent that the present invention is superior.

INDUSTRIAL APPLICABILITY

The effects of the dimples for heat release can be realized also in tires other than run flat tires. The pneumatic tire according to the present invention can be mounted to various vehicles.

DESCRIPTION OF THE REFERENCE CHARACTERS

| | |
|---|---|
| 2 | tire |
| 4 | tread |
| 8 | sidewall |
| 10 | clinch section |
| 12 | bead |
| 14 | carcass |
| 16 | support layer |
| 18 | belt |
| 20 | band |
| 62, 74, 76, 82 | dimple |
| 64 | land |
| 66 | slope surface |
| 68 | bottom surface |
| 70, 92 | major axis |
| 72, 94 | minor axis |
| 78 | first curved surface |
| 80 | second curved surface |
| 84 | first semicircle |
| 86 | first straight line |
| 88 | second semicircle |
| 90 | second straight line |
| 108 | sidewall |
| 162 | dimple |

| 164 | land |
| 166 | slope surface |
| 168 | bottom surface |
| 208, 272, 282 | sidewall |
| 262, 274, 284 | dimple |
| 264 | land |
| 266, 276, 286 | slope surface |
| 268, 278, 288 | bottom surface |
| 270, 290 | side |
| 302 | tire |
| 304 | tread |
| 308 | sidewall |
| 310 | clinch section |
| 312 | bead |
| 314 | carcass |
| 316 | support layer |
| 318 | belt |
| 320 | band |
| 362, 376 | element |
| 364, 382 | land |
| 366, 378 | first slope surface |
| 368, 380 | second slope surface |
| 370 | deepest portion |

**Claims**

1. A pneumatic tire (2) comprising:

   a tread (4) having an outer surface which forms a tread surface (26);
   a pair of sidewalls (8) extending from ends, respectively, of the tread (4) approximately inward in a radial direction;
   a pair of beads (12) positioned approximately inwardly from the pair of sidewalls (8), respectively, in the radial direction;
   a carcass (14) positioned along the tread (4) and the pair of sidewalls (8), so as to extend on and between the pair of beads (12); and
   multiple dimples (62) formed on side surfaces, wherein

a surface shape of each dimple (62) is an elongated circle with a major axis of a length La and a minor axis of a length Li,

a ratio La/Li is in a range of 1.2/1 to 5/1,

**characterized in that**

each dimple (62) has a flat bottom surface (68), and a slope surface (66) which extends from an edge (Ed) thereof to the flat bottom surface (68), and which is sloped relative to a tire radial direction,

wherein an angle ($\alpha$) of the slope surface (66) is in a range of from 10 to 55 degrees.

2. The tire according to claim 1, wherein the surface shape of each dimple (62) is an ellipse.

3. The tire according to claim 1, further comprising support layers (16) positioned inwardly from the pair of sidewalls (8), respectively, in an axial direction.

**Patentansprüche**

1. Luftreifen (2), umfassend:

eine Lauffläche (4), die eine Außenfläche aufweist, die eine Laufflächen-Oberfläche (26) bildet;

ein Paar Seitenwände (8), die sich jeweils von Enden der Lauffläche (4) annähernd nach innen in einer radialen Richtung erstrecken;

ein Paar Wülste (12), die jeweils annähernd innen von dem Paar Seitenwänden (8) in der radialen Richtung angeordnet sind;

eine Karkasse (14), die entlang der Lauffläche (4) und dem Paar Seitenwänden (8) angeordnet ist, so dass sie sich auf und zwischen dem Paar Wülsten (12) erstreckt; und

mehrere Vertiefungen (62), die an Seitenflächen gebildet sind, wobei

eine Oberflächenform jeder Vertiefung (62) ein gestreckter Kreis mit einer Hauptachse mit einer Länge La und einer Nebenachse mit einer Länge Li ist,

ein Verhältnis La/Li in einem Bereich von 1,2/1 bis 5/1 liegt,

**dadurch gekennzeichnet, dass**

jede Vertiefung (62) eine ebene Grundfläche (68) und eine Schrägfläche (66) aufweist, die sich von einem Rand (Ed) davon zu der ebenen Grundfläche (68) erstreckt und die bezogen auf die radiale Richtung des Reifens schräg ist,

wobei ein Winkel ($\alpha$) der Schrägfläche (66) in einem Bereich von 10 bis 55 Grad liegt.

2. Reifen nach Anspruch 1, wobei die Oberflächenform jeder Vertiefung (62) eine Ellipse ist.

3. Reifen nach Anspruch 1, der ferner Trägerschichten (16) umfasst, die jeweils innen von dem Paar Seitenwänden (8) in einer axialen Richtung angeordnet sind.

**Revendications**

1. Bandage pneumatique (2) comprenant :

une bande de roulement (4) ayant une surface extérieure qui forme une surface de roulement (26) ;

une paire de parois latérales (8) s'étendant depuis des extrémités, respectivement, de la bande de roulement (4) approximativement vers l'intérieur dans une direction radiale ;

une paire de talons (12) positionnés approximativement à l'intérieur depuis la paire de parois latérales (8), respectivement, dans la direction radiale ;

une carcasse (14) positionnée le long de la bande de roulement (4) et de la paire de parois latérales (8), de manière à s'étendre sur et entre la paire de talons (12) ; et

une multiplicité de petites cuvettes (62) formées sur des surfaces latérales, dans lequel

une forme de surface de chaque petite cuvette (62) est un cercle allongé avec un grand axe d'une longueur La et un petit axe d'une longueur Li, un rapport La/Li est dans une plage de 1,2/1 à 5/1,

**caractérisé en ce que**

chaque petite cuvette (62) a une surface de fond plane (68), et une surface en pente (66) qui s'étend depuis une bordure (Ed) d'elle-même jusqu'à la surface de fond plane (68), et qui est en pente par rapport à une direction radiale du pneumatique,

dans lequel un angle ($\alpha$) de la surface en pente (66) est dans une plage de 10 à 55°.

2. Pneumatique selon la revendication 1, dans lequel la forme de surface de chaque petite cuvette (62) est une ellipse.

3. Pneumatique selon la revendication 1, comprenant en outre des couches de support (66) positionnées à l'intérieur depuis la paire de parois latérales (8), respectivement, dans une direction axiale.

Fig. 1

EP 2 431 197 B1

Fig. 2

Fig. 3

Fig. 4

Fig. 5

Fig. 6

Fig. 7

162  108  162

134  162  110  162  162

Fig. 8

Fig. 9

Fig. 10

168 162a  166  164  166  162b

α  β

A1

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

EP 2 431 197 B1

Fig. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007050854 A
- WO 200732405 A
- JP 2000016030 A
- JP 4297310 A